# EUROPÄISCHE PATENTSCHRIFT

(11) **EP 3 271 156 B1**
(45) Veröffentlichungstag und Bekanntmachung des Hinweises auf die Patenterteilung: **21.04.2021**
(21) Anmeldenummer: 16717237.8
(22) Anmeldetag: 10.03.2016
(51) Int. Cl.: B05C 19/04, B29C 31/02, B29C 64/165, B29C 64/214, B33Y 10/00, B33Y 30/00, B33Y 40/00, B22F 3/00, B22F 3/105

(54) **VERFAHREN UND VORRICHTUNG ZUM HERSTELLEN VON 3D-FORMTEILEN MIT DOPPELRECOATER**
METHOD AND DEVICE FOR PRODUCING 3D SHAPED ARTICLES WITH A DOUBLE RECOATER
PROCÉDÉ ET DISPOSITIF DE FABRICATION DE PIÈCES MOULÉES EN 3D AU MOYEN D'UN DOUBLE APPLICATEUR

(30) Priorität: 17.03.2015 DE 102015003372
(43) Veröffentlichungstag der Anmeldung: 24.01.2018
(73) Patentinhaber: Voxeljet AG, 86316 Friedberg (DE)
(72) Erfinder: EDERER, Ingo, 82269 Geltendorf (DE); HEYMEL, Bastian, 86153 Augsburg (DE)
(74) Vertreter: Helbig, Christian
(86) Internationale Anmeldenummer: PCT/DE2016/000106
(87) Internationale Veröffentlichungsnummer: WO 2016/146095

(56) Entgegenhaltungen:
- EP-A1- 2 191 922
- WO-A1-2005/080010
- DE-A1- 4 400 523
- US-A1- 2008 156 263
- US-B1- 6 799 959

## Beschreibung

Die Erfindung bezieht sich auf ein Verfahren und eine Vorrichtung zum Herstellen dreidimensionaler Modelle mittels Schichtaufbautechnik, wobei der Beschichter (recoater) in zwei Richtungen beschichten kann.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht mittels Beschichter (recoater) auf eine Plattform aufgetragen und dieses selektiv mittels eines Druckkopfes mit einem Bindermaterial bedruckt. Der mit dem Binder bedruckte Partikelbereich verbindet und verfestigt sich unter dem Einfluss des Binders und gegebenenfalls eines zusätzlichen Härters. Anschließend wird die Bauplattform um eine Schichtdicke abgesenkt oder die Beschichter-/Druckkopfeinheit angehoben und eine neue Schicht Partikelmaterial aufgetragen, die ebenfalls, wie oben beschrieben, selektiv bedruckt wird. Diese Schritte werden wiederholt, bis die gewünschte Höhe des Objektes erreicht ist. Aus den bedruckten und verfestigten Bereichen entsteht so ein dreidimensionales Objekt (Formteil).

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpulver, z.B. durch Abbürsten, weiter gesäubert werden.

In ähnlicher Weise arbeiten auch andere Pulver-gestützte Rapid-Prototyping-Prozesse, wie z.B. das selektive Lasersintern oder das Elektron-Beam-Sintern bei denen jeweils ebenso ein loses Partikelmaterial schichtweise ausgebracht und mit Hilfe einer gesteuerten physikalischen Strahlungsquelle selektiv verfestigt wird.

Im Folgenden werden alle diese Verfahren unter dem Begriff "dreidimensionale Druckverfahren" oder 3D-Druckverfahren zusammengefasst.

Diese Verfahren nutzen zum Teil unterschiedliche Möglichkeiten des Schichtauftrags. Bei einigen Verfahren wird das für die gesamte Schicht benötigte Partikelmaterial einer dünnen Klinge vorgelegt. Diese wird anschließend über den Baubereich bewegt und streicht das vorgelegte Material aus und glättet es dabei. Eine weitere Art des Schichtauftrags ist das kontinuierliche Vorlegen eines geringen Volumens von Partikelmaterial während der Verfahrbewegung der Klinge. Dazu ist die Klinge üblicherweise an der Unterseite eines beweglichen Silos befestigt. Direkt über oder neben der Klinge ist ein einstellbarer Spalt vorgesehen, durch welchen das Partikelmaterial aus dem Silo ausfließen kann. Die Anregung des Ausflusses geschieht dabei durch das Einbringen von Schwingungen in das Silo-Klingen-System.

Diese aus dem Stand der Technik bekannten Vorrichtungen weisen Beschichtersysteme auf, die die Partikelbeschichtung lediglich in eine Richtung zulassen. Dabei wird in einer Überfahrt des Baufeldes in eine Richtung das Partikelmaterial aufgebracht, dann wird der Beschichter wieder in seine Startposition zurückgefahren ohne einen Beschichtungsvorgang durchzuführen. Der Druckkopf verfährt entweder ganz unabhängig vom Beschichter oder folgt diesem und bringt den Binder unmittelbar nach der Partikelbeschichtung auf. Damit sind Leerfahrten des Beschichters verbunden, die verfahrenstechnisch Zeit benötigen und somit den Volumenoutput pro Zeiteinheit negativ beeinflussen.

Eine bekannte Maschine und Verfahren zum Herstellen von dreidimensionalen Objekten ist in der EP 0 644 809 B1 und der DE 10 2006 030 350 A1 beschrieben. Auch bei dieser Maschine bringt der Recoater in einer Überfahrt des Baufeldes Partikelmaterial auf und wird anschließend in seine Startposition zurückgefahren. Eine 3D-Druckvorrichtung, Doppelrecoater oder ein 3D-Druckverfahren gemäß der vorliegenden Erfindung wird hier weder offenbart noch nahe gelegt.

Der Volumenoutput pro Zeiteinheit wurde oben bereits erwähnt und er ist ein bedeutender Wirtschaftlichkeitsfaktor von 3D-Drucksystemen. Er errechnet sich aus der Zeit, die ein 3D-Drucksystem für eine Schicht benötigt und dem Volumenoutput pro Schicht. Die Schichtzeit ist die Summe der Zeiten, die ein 3D-Drucksystem für die Prozessschritte Schichtauftrag, Verfestigen der Schichtbereiche, Absenken der Bauplattform in den Bauzylinder (Bauraum), sowie für Nebenschritte wie Nachfüllen des Partikelmaterials, Reinigung der Verfestigungseinrichtung, Reinigung des Beschichters oder Leerfahrten, benötigt.

Leerfahrten von Beschichtern wie sie oben für bekannte 3D-Druckverfahren und Vorrichtungen beschrieben wurden, wirken sich nachteilig auf die Prozesszeit und den Volumenoutput pro Zeiteinheit aus.

Die Schichtzeit ist ein wichtiger Wirtschaftlichkeitsfaktor von 3D-Drucksystemen. Gemäß dem Stand der Technik können die Prozessschritte und Nebenschritte folgendermaßen anteilig auf die Gesamtschichtzeit verteilt sein: 34% Schichtauftrag, 47% Verfestigen der Schichtbereiche, 4% Absenken in den Bauzylinder, 15% Nachfüllen von Partikelmaterial und Reinigung des Beschichters. Für den Schichtauftrag werden bei Verfahren und Vorrichtungen des Standes der Technik ca. 7,5% der Gesamtschichtzeit für Leerfahrten verwendet. Allein durch die Vermeidung von Beschichterleerfahrten kann die Schichtzeit eines 3D-Drucksystems um ca. 7,5% verringert werden. Folglich würde sich die Leistungsfähigkeit und damit auch die Wirtschaftlichkeit um ca. 8% erhöhen, könnte dieser Nachteil von bekannten Vorrichtungen und Verfahren vermieden werden. Der Grund für Beschichterleerfahrten ist die einseitige Wirkrichtung des Beschichters gemäß dem Stand der Technik. Die Verfestigungssysteme sind gemäß dem Stand der Technik doppelt wirkend ausgeführt. Eine echte Parallelisierung der Prozessschritte Verfestigung der Schichtbereiche und Schichtauftrag ist mit bekannten Verfahren und Vorrichtungen gemäß dem Stand der Technik nicht möglich, da die hier vorhandenen Beschichter den Beschichtungsvorgang lediglich in eine Richtung durchführen können.

Die US 2008/0156263 A1 beschreibt eine Vorrichtung und ein Verfahren zur Herstellung von dreidimensionalen Objekten, die einen Beschichter zum Schichtauftrag aufweist und die dadurch gekennzeichnet ist, dass das Auftragsmodul austauschbar ist. Eine Vorrichtung und ein Verfahren wie hierin beansprucht wird darin weder offenbart noch nahegelegt.

Die WO 2005/080010 A1 betrifft ein 3D-Druckverfahren und eine Vorrichtung, die einen Pulveraustrittsspalt aufweist, der durch Schüttkegelbildung verschlossen wird. Eine Vorrichtung und ein Verfahren wie hierin beansprucht wird darin weder offenbart noch nahegelegt.

Die oben dargestellten Probleme und Nachteile bei bekannten Verfahren und Vorrichtungen beinhalten somit Verfahrensnachteile und gleichermaßen wirtschaftliche Nachteile.

Es war deshalb eine Aufgabe der vorliegenden Erfindung konstruktive Mittel bereitzustellen, die ein verbessertes 3D-Druckverfahren erlauben oder zumindest die Nachteile des Standes der Technik zu verbessern oder ganz zu vermeiden.

Eine weitere Aufgabe der vorliegenden Erfindung war es somit, ein Verfahren, und/oder eine Vorrichtung bereitzustellen, die es ermöglicht, die Prozesszeit zu reduzieren und den Volumenoutput pro Zeiteinheit zu erhöhen und so das Verfahren und die Vorrichtung unter wirtschaftlichen Aspekten zu verbessern.

### Kurze Zusammenfassung der Erfindung

Die der Anmeldung zugrunde liegende Aufgabe wird in einem Aspekt mit einer Vorrichtung und einem Verfahren gelöst, in dem ein Beschichter zum Einsatz kommt, der eine Parallelisierung der Verfahrensschritte Beschichten/Partikelauftrag und Verfestigen ermöglicht.

Insbesondere wird eine der Anmeldung zugrunde liegende Aufgabe dadurch gelöst, dass ein Beschichter entwickelt wurde, der in zwei Richtungen Partikelmaterial auftragen kann.

Weiterhin können in einem weiteren Aspekt der Offenbarung in dem offenbarten Beschichter und Druckkopf unabhängig voneinander verfahren werden und/oder beide in mehrere Richtungen, jedenfalls mindestens in zwei Richtungen, verfahren werden und dabei ihre vorgesehene Aufgabe des Bedruckens bzw. des selektiven Binderauftrages verrichten.

In einem weiteren Aspekt der Offenbarung wird eine der Anmeldung zugrunde liegende Aufgabe auch dadurch gelöst, dass ein Silo (ein Vorratsbehälter mit Partikelmaterial) mit einer Vibrationseinrichtung zusammen mit einer Partikelmaterialauftragsvorrichtung und zwei Nivellierungsvorrichtungen oder zusammen mit zwei Partikelmaterialauftragsvorrichtungen und einer oder zwei Nivellierungsvorrichtungen zum Einsatz kommt. Alternativ kommen zwei Silos mit jeweils einer Partikelmaterialaustragsvorrichtung und einer Nivellierungsvorrichtung zusammen mit einer oder zwei Vibrationseinrichtungen zum Einsatz. Diese können entweder von einer gemeinsamen Verfahreinheit über die Bauebene bewegt werden oder getrennt voneinander verfahren werden.

Gegebenenfalls sind die Partikelmaterialauftragsvorrichtungen schaltbar ausgeführt.

In einem weiteren Aspekt der Offenbarung ist eine Lösung der Offenbarung den Prozessschritt des Schichtauftrags mittels eines beweglichen Silo-Klingen-Systems in zwei gegensätzlichen Richtungen zu ermöglichen. Dadurch kann vorteilhafter Weise die Prozessgeschwindigkeit erhöht und verbessert werden.

In noch einem weiteren Aspekt kann die Winkeleinstellung der Nivellierungsvorrichtungen, z.B. einer Beschichterklinge, für jede Nivellierungsvorrichtung einzeln oder schaltbar für das Gesamtsystem an einem Strukturelement des Gesamtsystems erfolgen.

Die Erfindung ist gerichtet auf ein 3D-Druckverfahren zum Herstellen von 3D-Formteilen mittels Schichtauftragstechnik, wobei ein Beschichter (25) verwendet wird, der zwei Beschichterklingen (06) und eine Partikelauftragsöffnung oder zwei Beschichterklingen (06) und zwei Partikelauftragsöffnungen, oder eine Beschichterklinge (06) und zwei Partikelauftragsöffnungen, wobei der Beschichter ein oder zwei Ausflussspalten (07) und eine oder zwei Dichtspalten (08) und Spalteinstellelement (9, 19, 23, 24); oder ein oder zwei Ausflussspalten (07) und eine verschiebbare Silowand (04) aufweist und weitere für den Schichtaufbau und zur selektiven Verfestigung bekannte Schritte durchgeführt werden, diese Schritte solange wiederholt werden bis das Formteil erstellt wurde und sich gegebenenfalls weitere Verfahrensschritte anschließen.

In einem bevorzugten Aspekt betrifft die Erfindung ein 3D-Druckverfahren wie oben beschrieben, wobei im Beschichter zum Dosieren von Partikelmaterial die Partikelauftragsöffnungen mit einer Schüttkegeldichtung (16) oder mittels Spalteinstellschieber (19, 23, 24) oder verschiebbarer Silowand (04) verschlossen und geöffnet werden.

In einem weiteren bevorzugten Aspekt betrifft die Erfindung ein 3D-Druckverfahren wie oben beschrieben, wobei der Beschichter (25) sequentiell in zwei Richtungen (13) verfahren wird und beim Verfahren jeweils Partikelmaterial (12') auf ein Baufeld (26) aufbringt und diese Schritte wiederholt werden können, vorzugsweise wobei der Beschichter (25) in eine erste Richtung (13) über das Baufeld (26) verfahren wird und aus der Partikelauftragsöffnung Partikelmaterial (12') in einer Schicht auf das Baufeld (26) in eine Richtung (13') aufgebracht wird, weitere für den Schichtaufbau und zur selektiven Verfestigung bekannte Schritte durchgeführt werden, anschließend der Beschichter (25) in eine zweite Richtung (13") über das Baufeld (26) verfahren wird und aus der Partikelauftragsöffnung Partikelmaterial (12') in einer weiteren Schicht auf das Baufeld (26) in eine zweite Richtung (13") aufgebracht wird

In einem weiteren bevorzugten Aspekt betrifft die Erfindung ein 3D-Druckverfahren wie oben beschrieben, wobei die Partikelauftragsöffnungen so ausgestaltet sind, dass das Partikelmaterial (12') nach unten oder seitlich auf das Baufeld aufgebracht wird.

In einem weiteren bevorzugten Aspekt betrifft die Erfindung ein 3D-Druckverfahren wie oben beschrieben, wobei die Partikelauftragsöffnung einen Ausflussspalt (07) und zwei Dichtespalte (08) aufweist oder/und wobei die Partikelauftragsöffnung von einem oder mehreren Partikelsilo (27) mit Partikelmaterial (12') versorgt wird.

In einem weiteren bevorzugten Aspekt betrifft die Erfindung ein 3D-Druckverfahren wie oben beschrieben, wobei das Partikelmaterial (12') auf das Baufeld (26) aufgebracht wird, indem beim Verfahren mit geeigneten Mitteln, z.B. einem Exzenter, jeweils eine Beschichterklinge (06) in Schwingung versetzt wird und dadurch das Partikelmaterial (12') auf das Baufeld (26) aufgebracht wird.

In einem weiteren bevorzugten Aspekt betrifft die Erfindung ein 3D-Druckverfahren wie oben beschrieben, wobei der Beschichter (25) seitlich verkippbar ist und dadurch ein vorbestimmter Winkel (14) zwischen Beschichterklinge (06) und dem Baufeld (26) eingestellt wird, vorzugsweise wobei der Winkel (14) auf -5 bis +5° eingestellt wird.

In einem weiteren bevorzugten Aspekt betrifft die Erfindung ein 3D-Druckverfahren wie oben beschrieben, wobei das Verkippen um eine Drehachse erfolgt, die jene Achse darstellt, die durch Überschneidung der mittigen Partikelauftragsöffnung und der Beschichterklingenunterseiten entsteht oder/und wobei das Verkippen mittels Stellelementen erfolgt.

In einem weiteren bevorzugten Aspekt betrifft die Erfindung ein 3D-Druckverfahren wie oben beschrieben, wobei beim Verfahren des Beschichters (25) und der Abgabe des Partikelmaterials (12') die Beschichterklinge (06) über das Baufeld (26) streicht und das Partikelmaterial (12') nivelliert.

In einem weiteren Aspekt betrifft die Erfindung eine 3D-Druckvorrichtung zum Herstellen von 3D-Formteilen, die i. mindestens einen Beschichter (25) mit zwei Beschichterklingen (06) und einer Partikelauftragsöffnung umfassend ein oder zwei Ausflussspalte (07) und ein oder zwei Dichtespalte (08), ii. mindestens einen Druckkopf, iii. mindestens ein Silo (27) für Partikelmaterial, iv. Spalteinstellelement (9, 19, 23, 24) oder eine verschiebbare Silowand (04) und v. ein Baufeld (26) aufweist, wobei die Partikelauftragsöffnung im wesentlichen horizontal oder vertikal angeordnet ist oder die Vorrichtung eine Beschichtereinheit aufweist, die vi. ein oder zwei Silos (27), vii. zwei im wesentlichen horizontale oder vertikale Partikelauftragsöffnungen und zwei Beschichterklingen (06) umfasst, sowie viii. mindestens einen Druckkopf, ix. ein oder zwei Mittel zum Erzeugen von Schwingungen und x. ein Baufeld (26), und wobei die Partikelauftragsöffnung(en), umfassend vorzugsweise ein oder zwei Ausflussspalte (07) und ein oder zwei Dichtespalte (08), optional schaltbar sind.

In einem weiteren bevorzugten Aspekt betrifft die Erfindung eine 3D-Druckvorrichtung wie oben beschrieben, wobei die Partikelauftragsöffnung(en) im Wesentlichen am unteren Ende des oder der Silos (27) angebracht ist, vorzugsweise wobei das oder die Silos (27) oder/und die Partikelauftragsöffnungen und Beschichterklingen (06) mit geeigneten Mitteln um eine Achse verkippbar sind und ein Winkel (14) von 0,1 bis 5° zwischen Baufeld (26) und jeder der beiden Beschichterklingen (06) einstellbar ist.

In einem weiteren bevorzugten Aspekt betrifft die Erfindung eine 3D-Druckvorrichtung wie oben beschrieben, wobei das oder die Silos (27), die Partikelauftragsöffnungen und die Beschichterklingen (06) mit geeigneten Mitteln einzeln um eine Achse verkippbar und/oder einstellbar sind.

In einem weiteren bevorzugten Aspekt betrifft die Erfindung eine 3D-Druckvorrichtung wie oben beschrieben, wobei jede Beschichterklinge (06) unabhängig mit einem Mittel zum Erzeugen von Schwingungen gekoppelt ist , vorzugsweise wobei der Dichtespalt (08) und der Ausflussspalt (07) mittels Spalteinstellelement (19) auf eine Breite von 5 bis 0 mm, vorzugsweise 3 bis 1 mm, einstellbar sind.

In einem weiteren bevorzugten Aspekt betrifft die Erfindung eine 3D-Druckvorrichtung wie oben beschrieben, wobei die Vorrichtungskomponenten so angeordnet sind, dass jeweils eine Beschichterklinge (06) und/oder der Silo (27) eine Schwingung ausführen kann.

In einem weiteren bevorzugten Aspekt betrifft die Erfindung eine 3D-Druckvorrichtung wie oben beschrieben, wobei die Schwingung vertikale oder/und horizontale Komponenten aufweist oder/und in Wesentlichen nach Art einer Drehbewegung erfolgt, vorzugsweise wobei die Einheit aus Silos (27), Partikelauftragsöffnungen, Beschichterklingen (06) und Mittel zum Erzeugen von Schwingungen in zwei gegensätzliche Richtungen (13', 13") verfahrbar sind und in beide Richtungen (13) ein Auftragen von Partikelmaterial (12') möglich ist.

In einem weiteren bevorzugten Aspekt betrifft die Erfindung eine 3D-Druckvorrichtung wie oben beschrieben, die eine Partikelbeschichtereinheit zum Herstellen von 3D-Formteilen aufweist, die aufweist i. eine oder zwei Partikelauftragsöffnungen, die im wesentlichen horizontal oder vertikal angeordnet sind, umfassend ein oder zwei Ausflussspalte (07) und gegebenenfalls ein oder zwei Dichtespalte (08) oder/und ein oder zwei Spalteinstellelemente (19), ii. zwei Beschichterklingen (06), iii. ein oder zwei Partikelmaterialsilo(s), iv. ein oder zwei Mittel zum Erzeugen von Schwingungen, und wobei die Partikelbeschichtereinheit ein Mittel aufweist, wodurch sie um einen Winkel verkippbar ist, vorzugsweise wobei die zwei Beschichterklingen (06) als ein Bauteil (21) ausgeführt sind.

### Beschreibung der Figuren

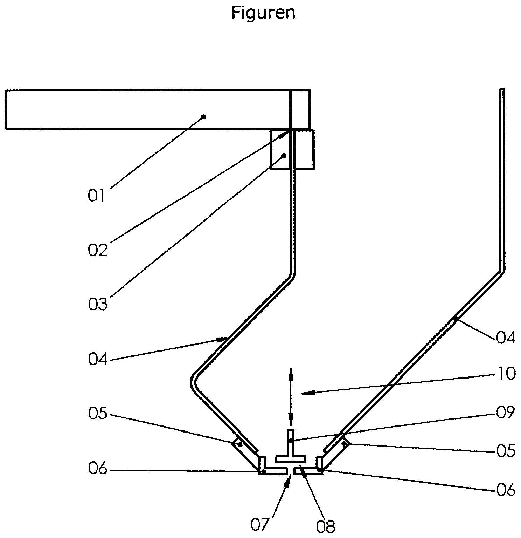

Fig. 1 - 4 zeigen eine bevorzugte Ausführungsform der Erfindung.

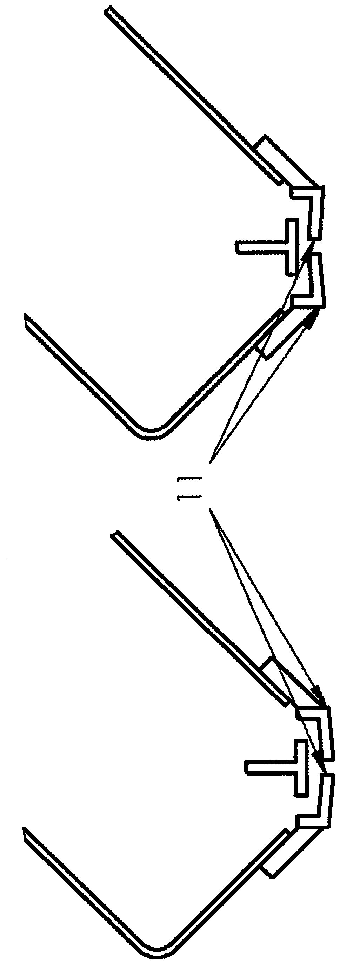

Fig. 1 und 2 beschreiben eine bevorzugte Vorrichtung der Erfindung, die eine Partikelauftragsöffnung mit zwei Dichtungsspalten (08) und einem Ausflussspalt (07) sowie zwei Beschichterklingen (06) zeigt. Das Spalteinstellelement (09) wird in Richtung (10) verfahren und so die Spaltgrößen bzw. der Spaltdurchmesser eingestellt. Die Beschichterklingen (06) sind mittels Beschichterklingenträger (05) befestigt. Das Gelenk (02) erlaubt ein Schwenken der Einheit aus Silo mit Silowänden (04) und Partikelauftragsöffnung.
Fig. 2 zeigt einen Ausschnitt, wobei austauschbare Beschichterklingen (11) dargestellt sind.

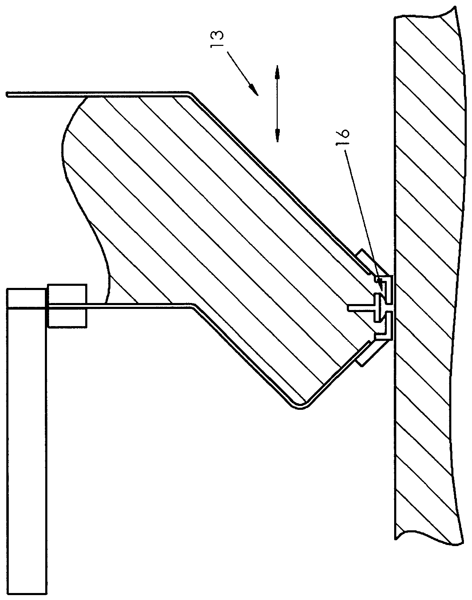

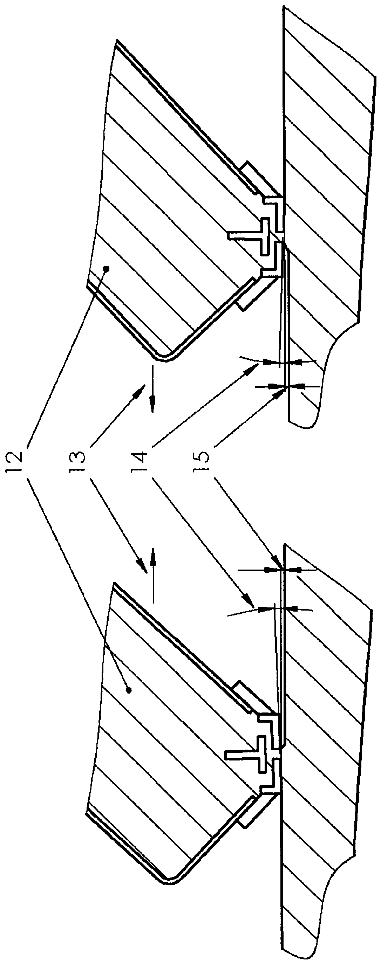

Fig. 1 und 2 beschreiben in einem Aspekt einen Silo (Recoaterpartikelmaterialvorratsbehälter) zur Aufnahme des zu verarbeitenden Partikelmaterials, welches an einem Gelenk, vorzugsweise einem Festkörpergelenk, pendelnd an einem Beschichterträger aufgehängt ist, vorzugsweise werden dazu Klemmelemente benutzt. am unteren Ende des Silos sind quer zur Beschichtungsrichtung verlaufend zwei Beschichterklingenträger mit jeweils einer Beschichterklinge, sowie ein senkrecht verschiebbares Spalteinstellelement angebracht, und zwar in der Form, dass sich die beiden Klingen diametral gegenüberstehen und einen senkrechten Ausflussspalt bilden, und die Mittelebene dieses Ausflussspalts vorzugsweise genau unter dem Gelenk liegt, und das Spalteinstellelement zentrisch über beiden Beschichterklingen sitzt, und das Spalteinstellelement in seiner Dimension in Beschichtungsrichtung größer ist als der Ausflussspalt, und das Spalteinstellelement somit mit jeder der beiden Beschichterklingen einen waagerechten Dichtspalt bildet, welcher durch das senkrechte Verschieben des Spalteinstellelements dimensioniert werden kann. Das Silo kann zu einer Pendelschwingung um das Gelenk angeregt werden. Die Beschichterklingenträger und Klingen sind so ausgeführt, dass die Beschichterklingen zum Zweck der Einstellung des Winkels zwischen Klingenunterseite und Baufeld gewechselt werden können. Der so entstehende Winkel kann bei jeder Klinge sowohl positive als auch negative Werte annehmen. Die Werte des Winkels sind +/- 0 bis 5°. Andernfalls wird zur Einstellung des Winkels zwischen Klingenunterseite und Baufeld das Gesamtsystem um den entsprechenden Winkel gekippt. Siehe hierzu Figuren 3 und 4.
Beim Wechsel der Beschichtungsrichtung wird das Gesamtsystem entsprechend in die andere Richtung gekippt. Das Kippen geschieht vorzugsweise mit Hilfe von Stellelementen automatisch. Die Drehachse der Kippung ist vorzugsweise jene fiktive Achse, welche durch die Überschneidung der Ausflussspaltmittelebene und der Klingenunterseite entsteht.

Fig. 3 und 4 zeigen die Funktionsweise dieser bevorzugten Ausführungsform der Erfindung, wobei in zwei Verfahrrichtungen beschichtet wird, d.h. Partikelmaterial in eine Richtung und eine Gegenrichtung auf das Baufeld aufgebracht wird.
Wird das Silo nicht zum Schwingen angeregt bildet das zu verarbeitende Partikelmaterial zwischen dem Spalteinstellelement und jeder Klinge seinen natürlichen Schüttwinkel aus. Die Dichtspalte sind dabei so eingestellt, dass das Partikelmaterial aufgrund seines Schüttwinkels nicht in den Ausflussspalt fließt und somit im Silo verbleibt. In diesem Zustand kann der Beschichter in der Maschine bewegt werden, ohne Partikelmaterial abzugeben.
Wird das Silo zum Schwingen angeregt verringert die dadurch eingebrachte Energie den natürlichen Schüttwinkel des Partikelmaterials. Dadurch fließt das Partikelmaterial durch den Ausflussspalt auf das Baufeld und währenddessen wird der Beschichter über das Baufeld bewegt, die dem Ausflussspalt nachfolgende Klinge streicht das ausfließende Partikelmaterial aus und glättet es. Sind die Beschichterklingen zum Zweck der Winkeleinstellung zwischen Klingenunterseite und Baufeld nicht austauschbar ausgeführt, wird der Winkel mittels Kippen des Gesamtsystems eingestellt. Der Winkel wird beispielsweise auf einen Wert eingestellt von 3°.

Beim Wechsel der Beschichtungsrichtung wird das Gesamtsystem entsprechend in die andere Richtung gekippt, wobei dies vorzugsweise mit Hilfe von Stellelementen automatisch geschieht.
Fig. 4 ist eine Vorrichtung entsprechend Fig. 1, die in die Richtung (13) verfahrbar ist und in beide Richtungen Partikelmaterial aufbringen kann. Dabei ist die Schichtstärke (15) des aufgetragenen Partikelmaterials dargestellt sowie die Klingenwinkel (14), die je nach Verfahrrichtung des Beschichters entsprechend durch ein Verkippen des Beschichters eingestellt werden können.

Fig. 5 - 8 zeigen eine weitere Ausführungsform der Offenbarung.

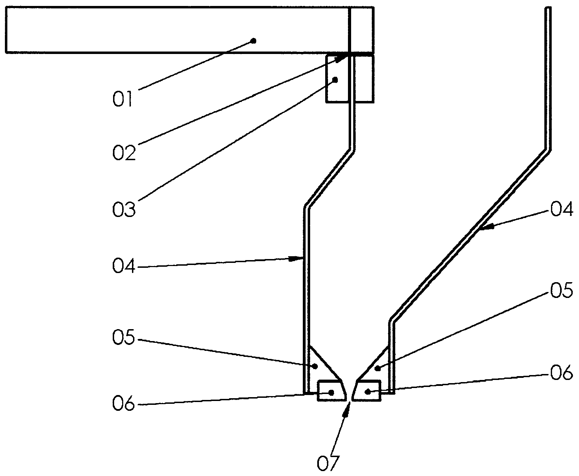

Fig. 5 beschreibt eine Vorrichtung nach der Offenbarung und 6 beschreiben eine bevorzugte Vorrichtung der Erfindung, die eine Partikelauftragsöffnung bestehend aus einem Ausflussspalt (07), zwei Beschichterklingen (06) und zwei Beschichterklingenträgern (05) zeigt. Die anderen Bauteile sind weitestgehend entsprechend Fig. 1 ausgestaltet.

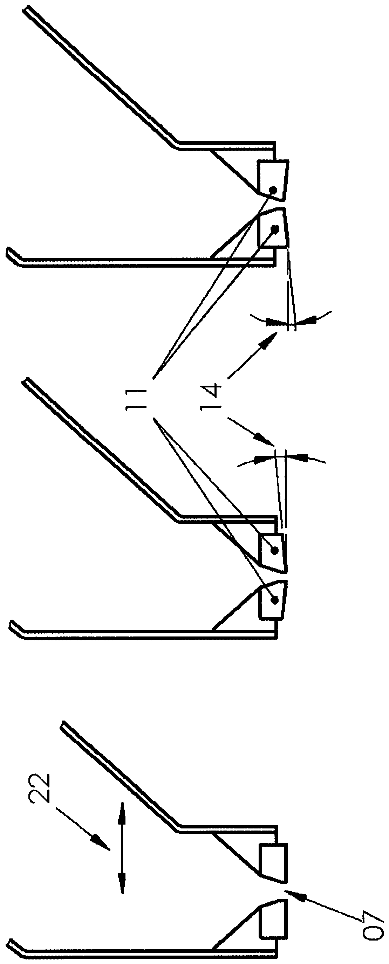

Fig. 6 zeigt im Detail die Verschiebbarkeit der Silowand (04) in Richtung (22), wodurch der Ausflussspalt (07) in seiner Breite einstellbar ist. Die austauschbaren Beschichterklingen (11) sowie die damit erreichbaren unterschiedlichen Klingenwinkel (14) sind ebenfalls erkennbar.

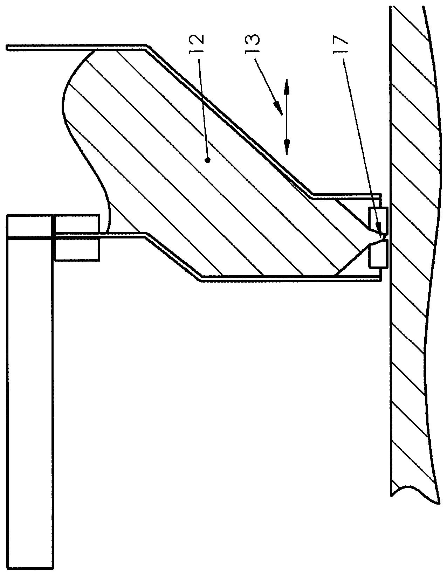

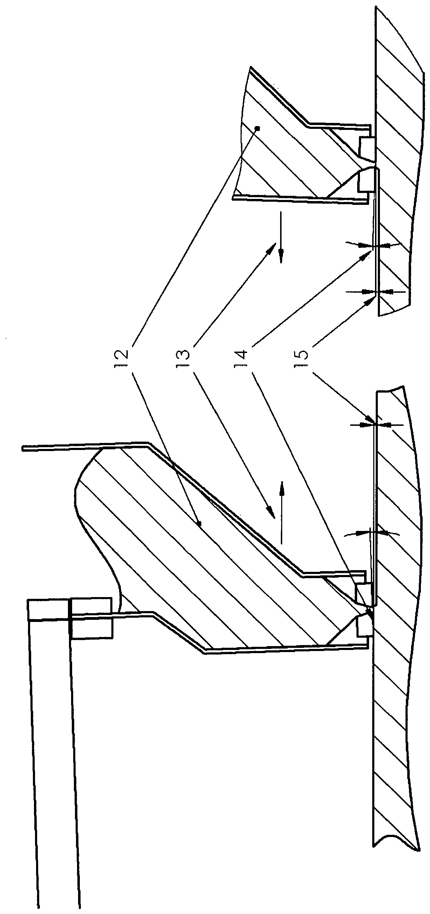

Fig. 5 und 6 beschreiben einen Silo zur Aufnahme des zu verarbeitenden Partikelmaterials, welches an einem Gelenk, vorzugsweise einem Festkörpergelenk, pendelnd an einem Beschichterträger aufgehängt ist, wobei vorzugsweise dazu Klemmelemente benutzt werden. Am unteren Ende des Silos sind quer zur Beschichtungsrichtung verlaufend zwei Beschichterklingenträger mit jeweils einer Beschichterklinge angebracht, und zwar in der Form, dass sich die beiden Klingen diametral gegenüberstehen und einen senkrechten Ausflussspalt bilden, und die Mittelebene dieses Ausflussspalts vorzugsweise genau unter dem Gelenk liegt, und die nicht pendelnd aufgehängte Silowand samt Beschichterklingenträger und Beschichterklinge zur anderen Silowand samt Beschichterklingenträger und Beschichterklinge in Beschichtungsrichtung verschieblich gelagert ist, und somit eine Einstellung der Ausflussspaltgröße ermöglicht wird. Das Silo kann zu einer Pendelschwingung um das Gelenk angeregt werden. Die Beschichterklingenträger und Klingen können so ausgeführt sein, dass die Beschichterklingen zum Zweck der Einstellung des Winkels zwischen Klingenunterseite und Baufeld gewechselt werden können. Der so entstehende Winkel kann bei jeder Klinge sowohl positive als auch negative Werte annehmen und wird im Beispiel auf 5° eingestellt. In einer Variante wird zur Einstellung des Winkels zwischen Klingenunterseite und Baufeld das Gesamtsystem um den entsprechenden Winkel gekippt. Siehe hierzu auch Fig. 7 und 8.

Fig. 7 und 8 zeigen die Funktionsweise dieser Ausführungsform der Offenbarung, wobei in zwei Verfahrrichtungen beschichtet wird, d.h. Partikelmaterial in eine Richtung und eine Gegenrichtung auf das Baufeld aufgebracht wird.
Wird das Silo nicht zum Schwingen angeregt, bildet das zu verarbeitende Partikelmaterial aufgrund der Geometrie der Partikel und/oder aufgrund von Kohäsions- und Adhäsionskräften, welche durch die eventuelle Beigabe von zusätzlichen Stoffen zum Partikelmaterial entstehen können, Brücken in dem senkrechten Ausflussspalt aus, sofern die Spaltgröße dem verwendeten Partikelmaterial entsprechend eingestellt ist.
Die Brücken halten die sich im Ausflussspalt befindlichen Partikel im Ausflusspalt und verhindern so ein Ausfließen des Partikelmaterials aus dem Silo. In diesem Zustand kann der Beschichter in der Maschine bewegt werden, ohne Partikelmaterial abzugeben.
Wird das Silo zum Schwingen angeregt, bricht die dadurch eingebrachte Energie die Partikelmaterialbrücken im Ausflussspalt auf. Dadurch fließt das Partikelmaterial durch den Ausflussspalt auf das Baufeld und der Beschichter wird über das Baufeld bewegt, wobei die dem Ausflussspalt nachfolgende Klinge das ausfließende Partikelmaterial ausstreicht und es glättet. Der Winkel der Beschichterklinge zum Baufeld wird mittels Kippen des Gesamtsystems eingestellt und beträgt beispielsweise 2°.

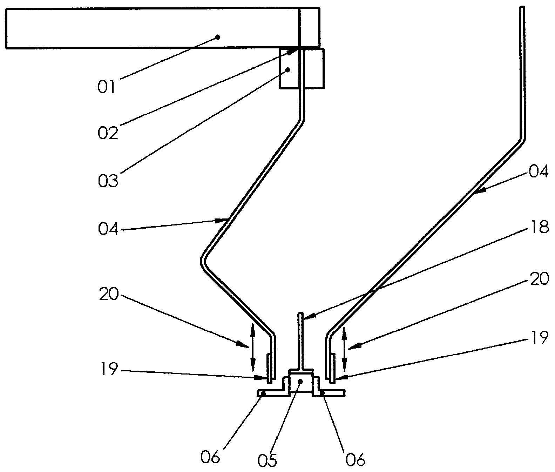

Fig. 9 - 12 zeigen eine weitere bevorzugte Ausführungsform der Erfindung.

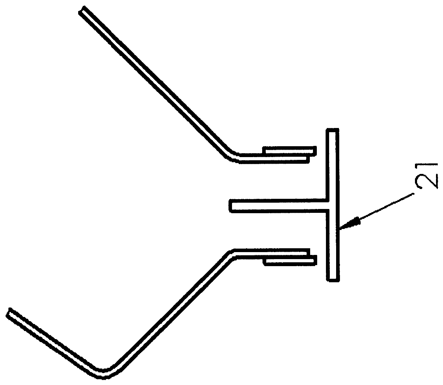

Fig. 9 und 10 beschreiben eine bevorzugte Vorrichtung der Erfindung, die zwei Partikelauftragsöffnungen aufweist und wobei die zwei Beschichterklingen (06) mittels einem Beschichterklingenträger (05) gehalten werden und mittels Spalteinstellschieber (19) in Richtung (20) der Durchmesser des Ausflussspalt einstellbar ist. Diese Ausführungsform zeigt außerdem das Versteifungselement 18.

In der Detaildarstellung in Fig. 10 ist das Klingensystem aus einem Bauteil (21) gefertigt, das entsprechend in Fig. 9 austauschbar ist.

Fig. 9 und 10 beschreiben eine bevorzugte Ausführungsform der Erfindung, bei der am unteren Ende des Silos quer zur Beschichtungsrichtung verlaufend eine Beschichterklingeneinheit bestehend aus einem oder mehreren Beschichterklingenträgern mit oder ohne Versteifungselementen und zwei Beschichterklingen sowie zwei senkrecht verschiebbare Spalteinstellschieber angebracht sind. Beide Klingen sind beidseitig von und symmetrisch zum Beschichterklingenträger angeordnet, und die Symmetrieebene dieser Anordnung liegt vorzugsweise genau unter dem Gelenk und in einer Flucht mit diesem, und die Spalteinstellschieber sind vorzugsweise ebenfalls symmetrisch zu dieser Symmetrieebene angeordnet und sind über den Beschichterklingen angebracht. Ein Spalteinstellschieber bildet somit mit der unter ihm befindlichen Beschichterklinge einen waagerechten Dichtspalt, welcher durch das senkrechte Verschieben des Spalteinstellschiebers dimensioniert werden kann. Vorzugsweise können die Spalteinstellschieber unabhängig voneinander mit Hilfe von Stellelementen automatisiert betätigt werden, um die Dichtspalte zu schließen und zu öffnen. Die Beschichterklingeneinheit kann auch so ausgeführt sein, dass sie aus einem einzigen Bauteil besteht. Das Silo kann zu einer Pendelschwingung um das Gelenk angeregt werden. Das Gesamtsystem kann zur Einstellung des Winkels zwischen Klingenunterseite und Baufeld um den entsprechenden Winkel gekippt werden. Beim Wechsel der Beschichtungsrichtung wird das Gesamtsystem entsprechend in die andere Richtung gekippt.

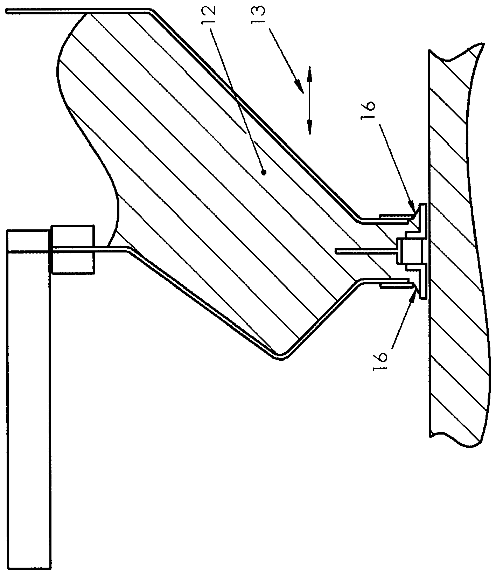

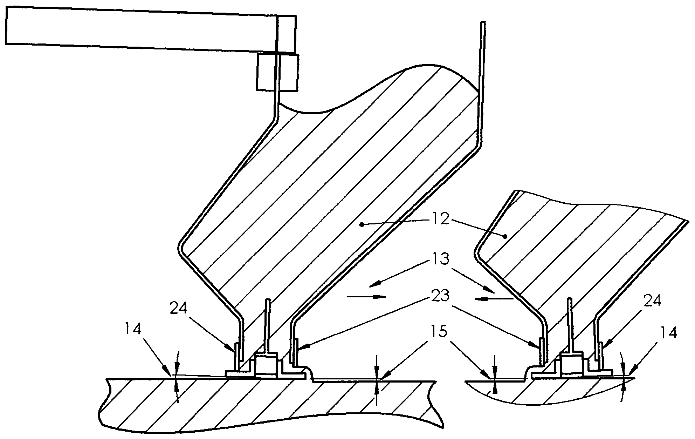

Fig. 11 und 12 zeigen die Funktionsweise dieser bevorzugten Ausführungsform der Erfindung, wobei in zwei Verfahrrichtungen beschichtet wird, d.h. Partikelmaterial in eine Richtung und eine Gegenrichtung auf das Baufeld aufgebracht wird.
Der Partikelauftrag auf das Baufeld wird wie auch in den anderen Ausführungsformen der Erfindung durch einen Schwingmechanismus erreicht. Ist der Schwingmechanismus ausgeschaltet fließt kein Partikelmaterial auf das Baufeld, da das Partikelmaterial in den Dichtspalten seinen natürlichen Schüttwinkel ausbildet.

Wird das Silo zum Schwingen angeregt verringert die dadurch eingebrachte Energie den natürlichen Schüttwinkel des Partikelmaterials. In diesem Zustand ist ein Spalteinstellschieber geschlossen und der andere geöffnet. Dadurch fließt das Partikelmaterial durch den Dichtspalt auf der Seite des geöffneten Spalteinstellschiebers auf das Baufeld, der Partikelmaterialausfluss aus dem gegenüberliegenden Dichtspalt wird durch den geschlossenen Spalteinstellschieber unterbunden. Die Beschichterklinge unter dem Spalt streicht das ausfließende Partikelmaterial aus und glättet es. Zur Winkeleinstellung zwischen Klingenunterseite und Baufeld wird das Gesamtsystem um eine Drehachse gekippt und ein Winkel von beispielsweise 4° eingestellt. Der Winkel zwischen Klingenunterseite und Baufeld kann dabei nur Werte annehmen, bei denen gewährleistet ist, dass die Beschichterklinge unter dem geschlossenen Spalteinstellschieber nicht das Baufeld berührt und somit die soeben aufgetragene Partikelmaterialschicht beeinträchtigt. Beim Wechsel der Beschichtungsrichtung wird der geöffnete Spalteinstellschieber geschlossen, der andere Spalteinstellschieber geöffnet und das Gesamtsystem entsprechend in die andere Richtung gekippt.

In Fig. 11 ist auch die Funktionsweise des Ausflussspalts und Dichtspalts mit Schüttkegeldichtung (16) dargestellt. Sofern keine Schwingung erzeugt wird bildet das Partikelmaterial an der Beschichterklinge einen Schüttkegel und verhindert so ein Ausfließen des Partikelmaterials (12) aus dem Silo. Wird eine Vibration und damit eine Schwingung erzeugt, verringert sich der natürliche Schüttwinkel des Partikelmaterials (12) und es kann auf das Baufeld aufgetragen werden.

In Fig. 12 ist ein geöffneter (23) und geschlossener Spalteinstellschieber (24) dargestellt. Je nach Verfahrrichtung wird der jeweilige Spalt geöffnet bzw. geschlossen und so in die jeweilige Richtung beschichtet.

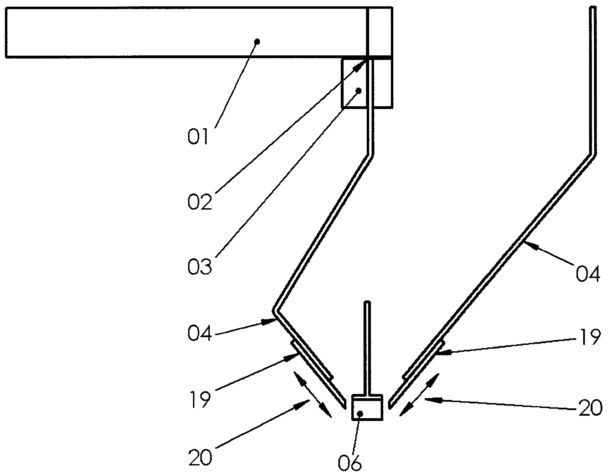

Fig. 13 - 16 zeigen eine weitere bevorzugte Ausführungsform der Erfindung.

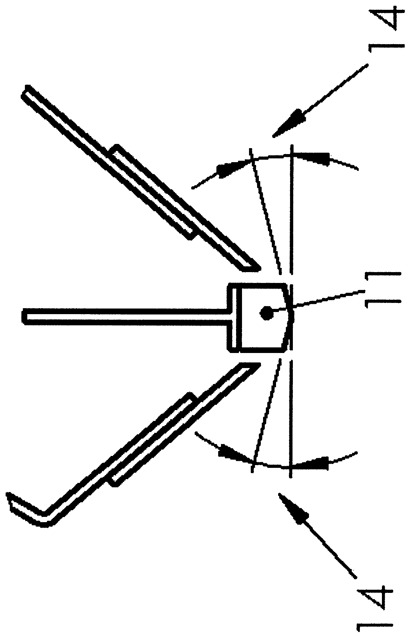

Fig. 13 und 14 beschreiben eine bevorzugte Vorrichtung der Erfindung, die eine Beschichterklinge (06) mit zwei Ausflussspalten, die in ihrem Durchmesser/Größe mittels zwei Spalteinstellschiebern (19) in Stellrichtung (20) einstellbar sind.

Im Detail zeigt Fig. 14 eine austauschbare Beschichterklinge (11) und den damit jeweils erreichbaren Klingenwinkel (14).

Fig. 13 und 14 beschreiben eine bevorzugte Ausführungsform der Erfindung, bei der am unteren Ende des Silos quer zur Beschichtungsrichtung verlaufend eine Beschichterklingeneinheit bestehend aus einer Beschichterklinge, optional mit oder ohne einem oder mehreren Beschichterklingenträgern und optional mit oder ohne einem oder mehreren Versteifungselementen sowie zwei verschiebbare Spalteinstellschieber angebracht sind. Die Klingenmittelebene liegt vorzugsweise genau unter dem Gelenk liegt und in einer Flucht mit diesem, und die Spalteinstellschieber sind vorzugsweise symmetrisch zu dieser Klingenmittelebene angeordnet, und die Spalteinstellschieber sind so angeordnet, dass sie mit jeweils einer Längsseite der Beschichterklinge einen senkrechten Ausflussspalt bilden, welcher durch das Verschieben des zugehörigen Spalteinstellschiebers in seiner Größe dimensioniert werden kann, und die Spalteinstellschieber können unabhängig voneinander mit Hilfe von Stellelementen automatisiert betätigt werden, um die Ausflussspalte zu schließen und zu öffnen.

Das Silo kann zu einer Pendelschwingung um das Gelenk angeregt werden. Die Beschichterklingeneinheit kann auch so ausgeführt sein, dass sie aus einem einzigen Bauteil besteht. Die Beschichterklingeneinheit kann auch so ausgeführt sein, dass die Beschichterklinge oder die ganze Einheit zum Zweck der Einstellung des Winkels zwischen Klingenunterseite und Baufeld gewechselt werden kann. Die Beschichterklinge kann so ausgeführt sein, dass der Querschnitt der Klinge an der Klingenunterseite einen Kegel aufweist, dessen Scheitelpunt vorzugsweise auf der Klingenmittelebene und somit unter dem Gelenk liegt. Der Winkel den eine Kegelfläche der Beschichterklingenunterseite mit dem Baufeld einschließt ist dann der Beschichterklingenwinkel und dieser hat vorzugsweise bei beiden Kegelflächen den gleichen Wert, z. B. 5°.
Das Gesamtsystem kann optional zur Einstellung des Winkels zwischen Klingenunterseite und Baufeld um den entsprechenden Winkel gekippt werden. Beim Wechsel der Beschichtungsrichtung wird das Gesamtsystem entsprechend in die andere Richtung gekippt. Falls die Klingenunterseite kegelig ausgeführt ist, ist die Drehachse der Kippung vorzugsweise parallel zur Klingenlängsseite und verläuft genau durch den Kegelscheitelpunkt.

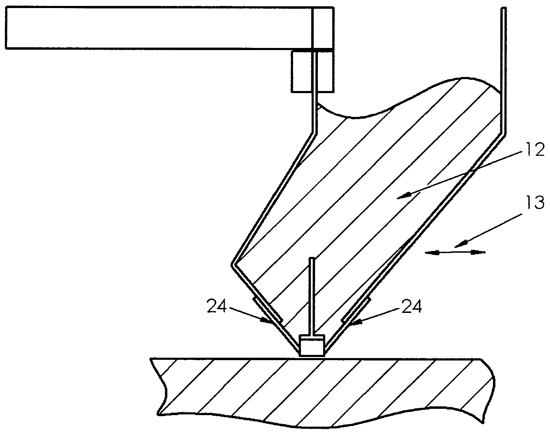

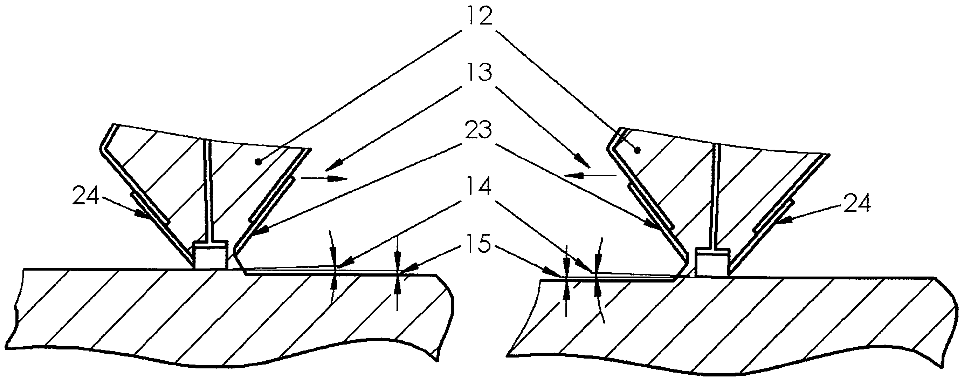

Fig. 15 und 16 zeigen die Funktionsweise dieser bevorzugten Ausführungsform der Erfindung, wobei in zwei Verfahrrichtungen beschichtet wird, d.h. Partikelmaterial in eine Richtung und eine Gegenrichtung auf das Baufeld aufgebracht wird.

Das Partikelmaterial fließt durch den Ausflussspalt auf das Baufeld, der Partikelmaterialausfluss aus dem gegenüberliegenden Ausflussspalt wird durch den geschlossenen Spalteinstellschieber unterbunden. Der Beschichter wird in Richtung des offenen Ausflussspaltes über das Baufeld bewegt und die dem Ausflussspalt nachfolgende Beschichterklinge streicht das ausfließende Partikelmaterial aus und glättet es. Die Klingenunterseite kann glatt oder kegelig ausgestaltet sein. Ist die Klingenunterseite nicht kegelig ausgeführt, wird das Gesamtsystem zur Einstellung des Winkels zwischen Klingenunterseite und Baufeld um den entsprechenden Winkel gekippt, d.h. um 3°. Ist die Klingenunterseite kegelig ausgeführt, so ist dieses Kippen optional. Die Drehachse der Kippung ist vorzugsweise jene fiktive Achse, welche durch die Überschneidung der Klingenmittelebene und der Klingenunterseite entsteht; falls die Klingenunterseite kegelig ausgeführt ist, ist die Drehachse der Kippung vorzugsweise parallel zur Klingenlängsseite und verläuft genau durch den Kegelscheitelpunkt.

In Fig. 16 ist insbesondere dargestellt wie jeweils der der Verfahrrichtung abgewandte Ausflussspalt mit einem Spalteinstellschieber verschlossen ist (24). Der Spaltschieber (23) ist geöffnet und erlaubt so das Aufbringen von Partikelmaterial (12) aus dem Silo.

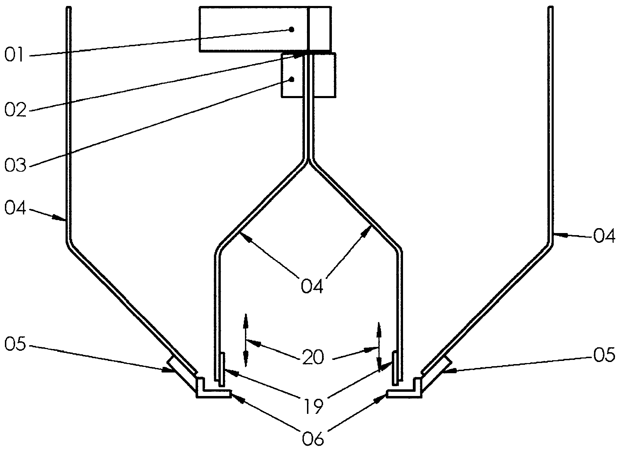

Fig. 17 - 20 zeigen eine weitere bevorzugte Ausführungsform der Erfindung.

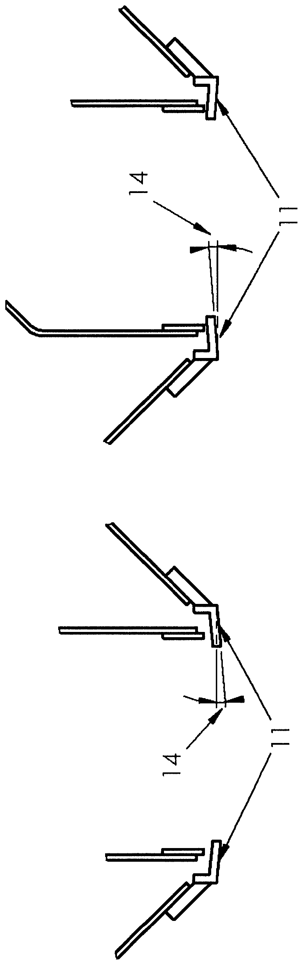

Fig. 17 und 18 beschreiben eine bevorzugte Vorrichtung der Erfindung mit zwei Partikelauftragsöffnungen, die jeweils eine Beschichterklinge (06) und einen Beschichterklingenträger (05) mit Spalteinstellschieber (19) verfahrbar in Richtung (20) zeigen, wobei auch der Klingenwinkel (14) dargestellt ist, der mittels austauschbaren Beschichterklingen (11) erreichbar ist.

Fig. 17 und 18 beschreiben ein Silo zur Aufnahme des zu verarbeitenden Partikelmaterials, welches aus zwei Kammern besteht und an einem Gelenk, vorzugsweise einem Festkörpergelenk, pendelnd an einem Beschichterträger aufgehängt ist. Die Kammern sind beidseitig vom Gelenk angeordnet und sind vorzugsweise zueinander symmetrisch, wobei die Symmetrieebene vorzugsweise senkrecht genau durch das Gelenk verläuft. Am unteren Ende jeder Silokammer sind quer zur Beschichtungsrichtung verlaufend eine Beschichterklingeneinheit bestehend aus einem Beschichterklingenträger mit oder ohne Versteifungselementen und einer Beschichterklinge sowie ein senkrecht verschiebbarer Spalteinstellschieber angebracht. Dabei sind die beiden Beschichterklingeneinheiten auf gleicher Höhe und zueinander symmetrisch angeordnet, und die Symmetrieebene dieser Anordnung liegt vorzugsweise genau unter dem Gelenk und in einer Flucht mit diesem. Die Spalteinstellschieber sind vorzugsweise ebenfalls symmetrisch zu dieser Symmetrieebene angeordnet und die Spalteinstellschieber sind über den Beschichterklingen angebracht. Dabei bildet ein Spalteinstellschieber mit der unter ihm befindlichen Beschichterklinge einen waagerechten Dichtspalt, welcher durch das senkrechte Verschieben des Spalteinstellschiebers dimensioniert werden kann, und die Dichtspalte sind einander zugewandt. Die Spalteinstellschieber können unabhängig voneinander mit Hilfe von Stellelementen automatisiert betätigt werden, um die Dichtspalte zu schließen und zu öffnen. Die Beschichterklingeneinheiten können auch so ausgeführt sein, dass die Beschichterklingeneinheiten oder die Beschichterklingen zur Einstellung des Winkels zwischen Klingenunterseite und Baufeld ausgetauscht werden können. Die Winkeleinstellung erfolgt wie oben beschrieben.

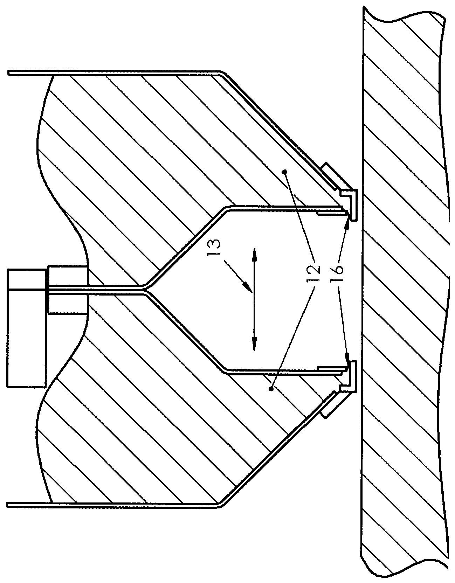

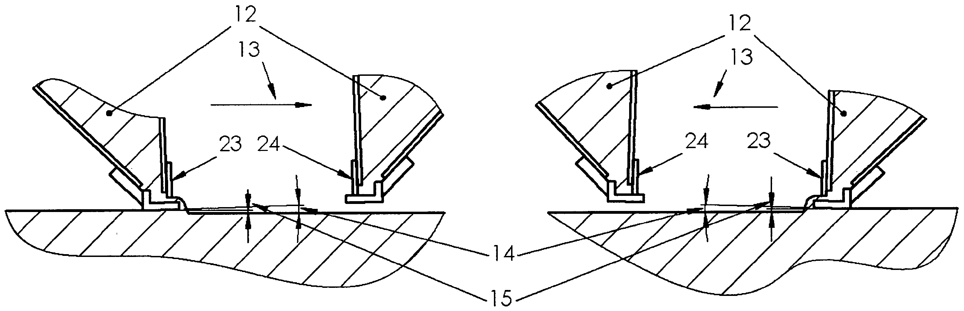

Fig. 19 und 20 zeigen die Funktionsweise dieser bevorzugten Ausführungsform der Erfindung, wobei in zwei Verfahrrichtungen beschichtet wird, d.h. Partikelmaterial in eine Richtung und eine Gegenrichtung auf das Baufeld aufgebracht wird.

Wird das Silo zum Schwingen angeregt, verringert die dadurch eingebrachte Energie den natürlichen Schüttwinkel des Partikelmaterials. In diesem Zustand ist ein Spalteinstellschieber geschlossen und der andere geöffnet. Das Partikelmaterial fließt durch den Dichtspalt aus der Kammer des geöffneten Spalteinstellschiebers auf das Baufeld, der Partikelmaterialausfluss aus der gegenüberliegenden Kammer wird durch den geschlossenen Spalteinstellschieber unterbunden. Währenddessen wird der Beschichter in Richtung des offenen Dichtspaltes über das Baufeld bewegt, die Beschichterklinge unter dem Spalt streicht das ausfließende Partikelmaterial aus und glättet es.

Fig. 20 stellt dar wie entsprechend der Verfahrrichtung die Spalteinstellschieber (23, 24) geöffnet bzw. geschlossen sind und eine entsprechende Schichtstärke (15) aufgetragen wird und der Klingenwinkel (14) durch Verkippen der Einheit erzeugt wird.

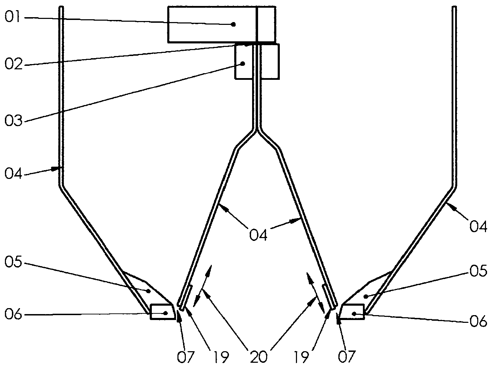

Fig. 21 - 24 zeigen eine weitere bevorzugte Ausführungsform der Erfindung.

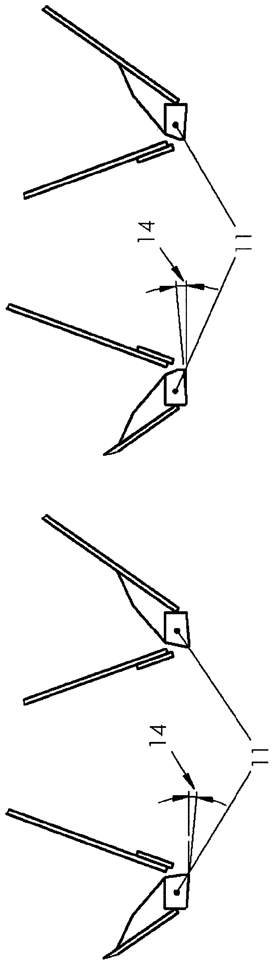

Fig. 21 und 22 beschreiben eine bevorzugte Vorrichtung der Erfindung, die eine Variation der Vorrichtung von Fig. 17 ist.

Fig. 21 und 22 beschreiben ein Silo zur Aufnahme des zu verarbeitenden Partikelmaterials, welches aus zwei Kammern besteht und an einem Gelenk, vorzugsweise einem Festkörpergelenk, pendelnd an einem Beschichterträger aufgehängt ist. Die Kammern sind beidseitig vom Gelenk angeordnet und sind vorzugsweise zueinander symmetrisch, wobei die Symmetrieebene vorzugsweise senkrecht genau durch das Gelenk verläuft. Am unteren Ende jeder Silokammer sind quer zur Beschichtungsrichtung verlaufend eine Beschichterklingeneinheit bestehend aus einem Beschichterklingenträger mit oder ohne Versteifungselementen und einer Beschichterklinge sowie ein verschiebbarer Spalteinstellschieber angebracht. Dabei sind die beiden Beschichterklingeneinheiten auf gleicher Höhe und zueinander symmetrisch angeordnet und die Symmetrieebene dieser Anordnung liegt genau unter dem Gelenk und in einer Flucht mit diesem. Die Spalteinstellschieber sind ebenfalls symmetrisch zu dieser Symmetrieebene angeordnet, und die Spalteinstellschieber sind so angeordnet, dass sie mit jeweils einer Längsseite der Beschichterklinge einen senkrechten oder fast senkrechten Ausflussspalt bilden, welcher durch das Verschieben des zugehörigen Spalteinstellschiebers in seiner Größe dimensioniert werden kann. Die Spalteinstellschieber können unabhängig voneinander mit Hilfe von Stellelementen automatisiert betätigt werden, um die Ausflussspalte zu schließen und zu öffnen. Die Seiten der zwei Beschichterklingen, welche mit den Spalteinstellschiebern die Ausflussspalte bilden sind einander zugewandt. Die Beschichterklingeneinheiten können auch so ausgeführt sein, dass die Beschichterklingeneinheiten oder die Beschichterklingen zur Einstellung des Winkels zwischen Klingenunterseite und Baufeld ausgetauscht werden können. Im weiteren wird die Klingenwinkeleinstellung wie bereits beschrieben vorgenommen.

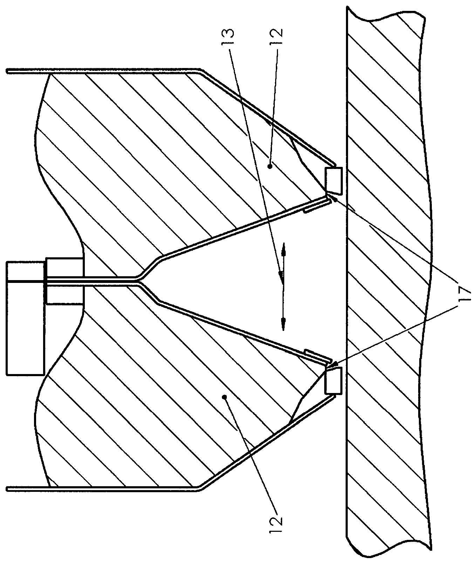

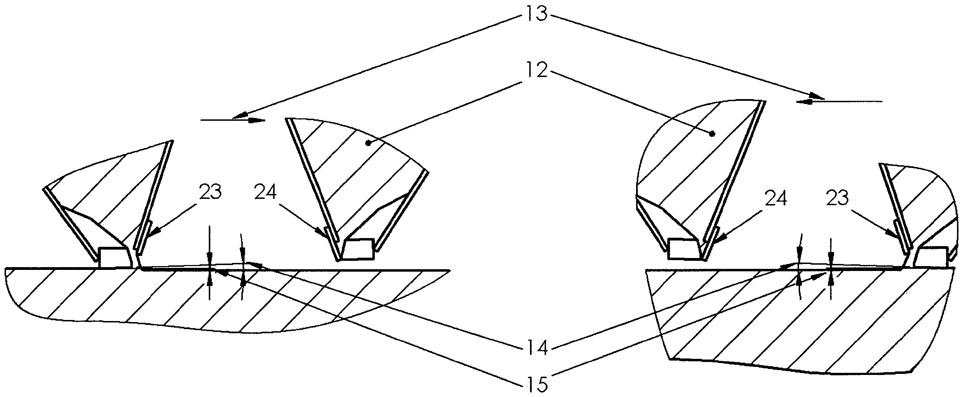

Fig. 23 und 24 zeigen die Funktionsweise dieser bevorzugte Ausführungsform der Erfindung, wobei in zwei Verfahrrichtungen beschichtet wird, d.h. Partikelmaterial in eine Richtung und eine Gegenrichtung auf das Baufeld aufgebracht wird.

Wird das Silo zum Schwingen angeregt fließt das Partikelmaterial durch den Ausflussspalt aus der Kammer des geöffneten Spalteinstellschiebers auf das Baufeld, der Partikelmaterialausfluss aus der gegenüberliegenden Kammer wird durch den geschlossenen Spalteinstellschieber unterbunden. Währenddessen wird der Beschichter so über das Baufeld bewegt, dass die dem geöffneten Ausflussspalt nachfolgende Beschichterklinge das ausfließende Partikelmaterial ausstreicht und glättet.

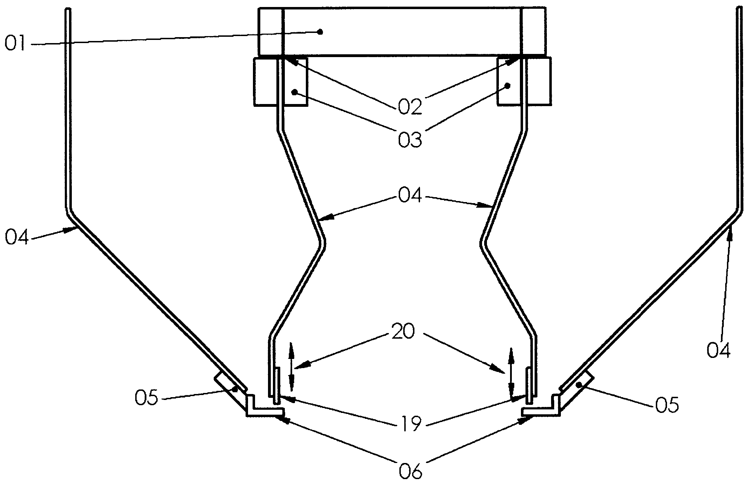

Fig. 25 - 28 zeigen eine weitere bevorzugte Ausführungsform der Erfindung.

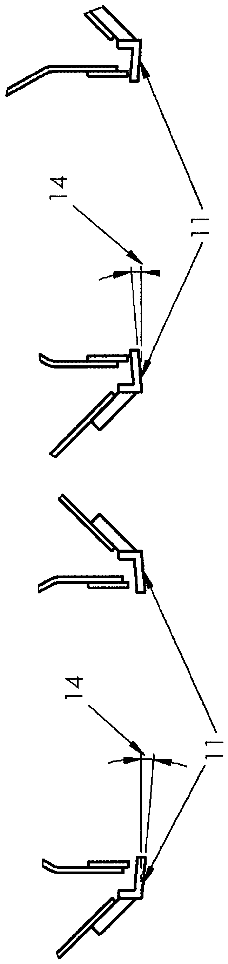

Fig. 25 und 26 beschreiben eine bevorzugte Vorrichtung der Erfindung, die gleichermaßen eine Variation der Vorrichtung von Fig. 17 und 21 darstellt, wobei insbesondere die Orientierung des Ausflussspaltes in horizontale bzw. in vertikale Richtung ausgeführt ist und die anderen Bauteile daran entsprechend angepasst wurden.

Fig. 25 und 26 beschreiben zwei Silos zur Aufnahme des zu verarbeitenden Partikelmaterials, welche jeweils an einem Gelenk, vorzugsweise einem Festkörpergelenk, pendelnd an einem Beschichterträger aufgehängt sind. Die Silos sind vorzugsweise symmetrisch zueinander an dem Beschichterträger aufgehängt, wobei die Symmetrieebene vorzugsweise die Mittelebene des Beschichterträgers ist. Am unteren Ende eines jeden Silos sind quer zur Beschichtungsrichtung verlaufend eine Beschichterklingeneinheit bestehend aus einem Beschichterklingenträger mit oder ohne Versteifungselementen und einer Beschichterklinge sowie ein senkrecht verschiebbarer Spalteinstellschieber angebracht. Dabei sind die beiden Beschichterklingeneinheiten auf gleicher Höhe und zueinander symmetrisch angeordnet, und die Symmetrieebene dieser Anordnung ist die Mittelebene des Beschichterträgers, wobei die Spalteinstellschieber vorzugsweise ebenfalls symmetrisch zu dieser Symmetrieebene angeordnet sind und die Spalteinstellschieber über den Beschichterklingen angebracht sind. Ein Spalteinstellschieber bildet mit der unter ihm befindlichen Beschichterklinge einen waagerechten Dichtspalt, welcher durch das senkrechte Verschieben des Spalteinstellschiebers dimensioniert werden kann. Die Dichtspalte sind einander zugewandt, und die Spalteinstellschieber können unabhängig voneinander mit Hilfe von Stellelementen automatisiert betätigt werden, um die Dichtspalte zu schließen und zu öffnen. Jedes Silo kann zu einer Pendelschwingung um das Gelenk, an dem es befestigt ist, angeregt werden. Dabei kann die Quelle der Schwingungsanregung für beide Silos die gleiche sein. Optional kann jedes Silo eine eigene Quelle der Schwingungsanregung besitzen. Die Winkeleinstellung erfolgt wie bereits beschrieben.

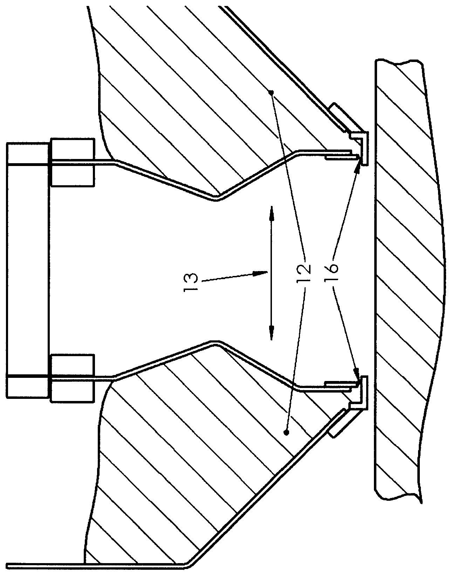

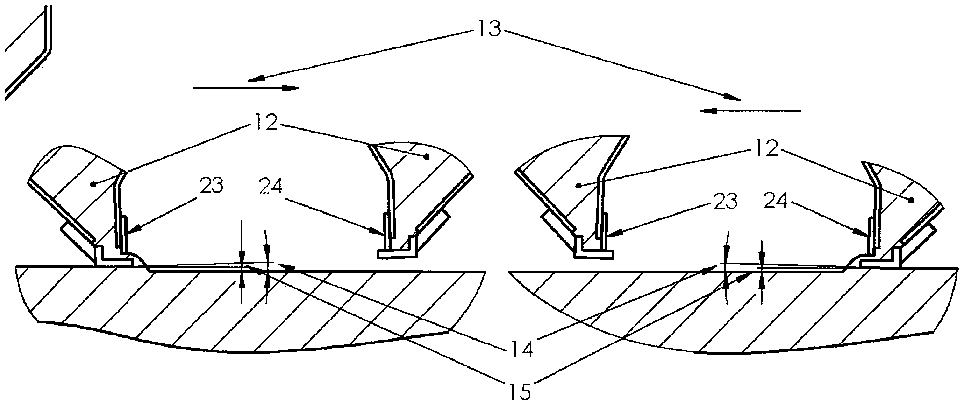

Fig. 27 und 28 zeigen die Funktionsweise dieser bevorzugte Ausführungsform der Erfindung, wobei in zwei Verfahrrichtungen beschichtet wird, d.h. Partikelmaterial in eine Richtung und eine Gegenrichtung auf das Baufeld aufgebracht wird.

Werden beide Silos durch dieselbe Quelle zum Schwingen angeregt, ist der Spalteinstellschieber eines Silos geschlossen und der des anderen Silos geöffnet. Wird lediglich ein Silo durch die ihm eigene Schwingungsquelle angeregt, ist der Spalteinstellschieber dieses Silos geöffnet, der Spalteinstellschieber des nicht angeregten Silos kann entweder geöffnet oder geschlossen sein. Das Partikelmaterial fließt durch den Dichtspalt aus dem angeregten Silo mit dem geöffneten Spalteinstellschieber auf das Baufeld, der Partikelmaterialausfluss aus dem anderen Silo wird entweder durch den geschlossenen Spalteinstellschieber oder durch Nichtanregung oder durch beides gleichzeitig unterbunden. Währenddessen wird der Beschichter in Richtung des offenen Dichtspaltes über das Baufeld bewegt, die Beschichterklinge unter dem Spalt streicht das ausfließende Partikelmaterial aus und glättet es.

Fig. 27 stellt wiederum eine Schüttkegeldichtung (16) dar, deren Dichtwirkung durch Vibration und Erzeugen einer Schwingung aufgehoben werden kann.

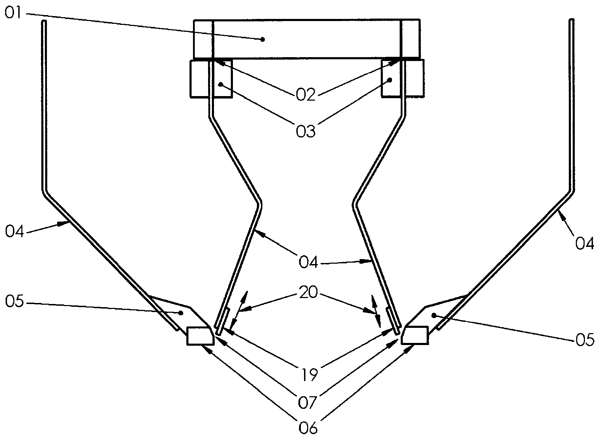

Fig. 29 - 32 zeigen eine weitere bevorzugte Ausführungsform der Erfindung.

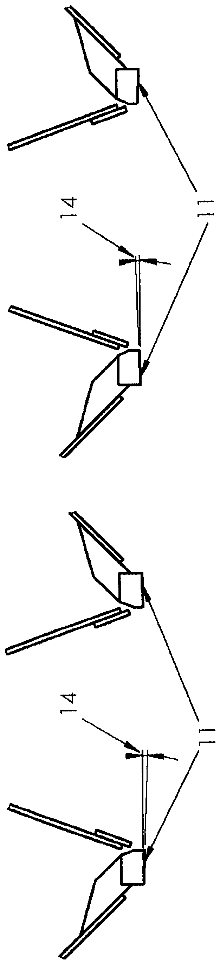

Fig. 29 und 30 beschreiben eine bevorzugte Vorrichtung der Erfindung, die gleichermaßen eine Variation der Vorrichtung von Fig. 17, 21 und 25 darstellen.

Fig. 29 und 30 beschreiben zwei Silos zur Aufnahme des zu verarbeitenden Partikelmaterials, welche jeweils an einem Gelenk, vorzugsweise einem Festkörpergelenk, pendelnd an einem Beschichterträger aufgehängt sind. Die Silos sind vorzugsweise symmetrisch zueinander an dem Beschichterträger aufgehängt, wobei die Symmetrieebene vorzugsweise die Mittelebene des Beschichterträgers ist. Am unteren Ende eines jeden Silos sind quer zur Beschichtungsrichtung verlaufend eine Beschichterklingeneinheit bestehend aus einem Beschichterklingenträger mit oder ohne Versteifungselementen und einer Beschichterklinge sowie ein verschiebbarer Spalteinstellschieber angebracht. Dabei sind die beiden Beschichterklingeneinheiten auf gleicher Höhe und zueinander symmetrisch angeordnet. Die Symmetrieebene dieser Anordnung ist vorzugsweise die Mittelebene des Beschichterträgers, und die Spalteinstellschieber sind vorzugsweise ebenfalls symmetrisch zu dieser Symmetrieebene angeordnet. Die Spalteinstellschieber sind so angeordnet, dass sie mit jeweils einer Längsseite einer Beschichterklinge einen senkrechten oder fast senkrechten Ausflussspalt bilden, welcher durch das Verschieben des zugehörigen Spalteinstellschiebers in seiner Größe dimensioniert werden kann und die Spalteinstellschieber unabhängig voneinander mit Hilfe von Stellelementen automatisiert betätigt werden können, um die Ausflussspalte zu schließen und zu öffnen. Die Seiten der zwei Beschichterklingen, welche mit den Spalteinstellschiebern die Ausflussspalte bilden sind einander zugewandt. Die Beschichterklingeneinheiten können auch so ausgeführt sein, dass die Beschichterklingeneinheiten oder die Beschichterklingen zur Einstellung des Winkels zwischen Klingenunterseite und Baufeld ausgetauscht werden können. Jedes Silo kann zu einer Pendelschwingung um das Gelenk, an dem es befestigt ist, angeregt werden. Dabei kann die Quelle der Schwingungsanregung für beide Silos die gleiche sein. Optional kann jedes Silo eine eigene Quelle der Schwingungsanregung besitzen. Sind die Beschichterklingeneinheiten zur Einstellung des Klingenwinkels nicht austauschbar ausgeführt, kann das Gesamtsystem zur Einstellung des Winkels zwischen Klingenunterseite und Baufeld um den entsprechenden Winkel gekippt werden. Dies geschieht wir bereits beschreiben. Beim Wechsel der Beschichtungsrichtung wird das Gesamtsystem entsprechend in die andere Richtung gekippt.

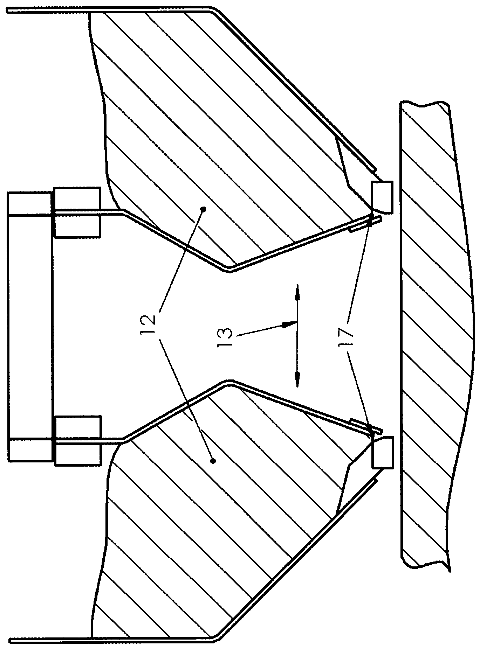

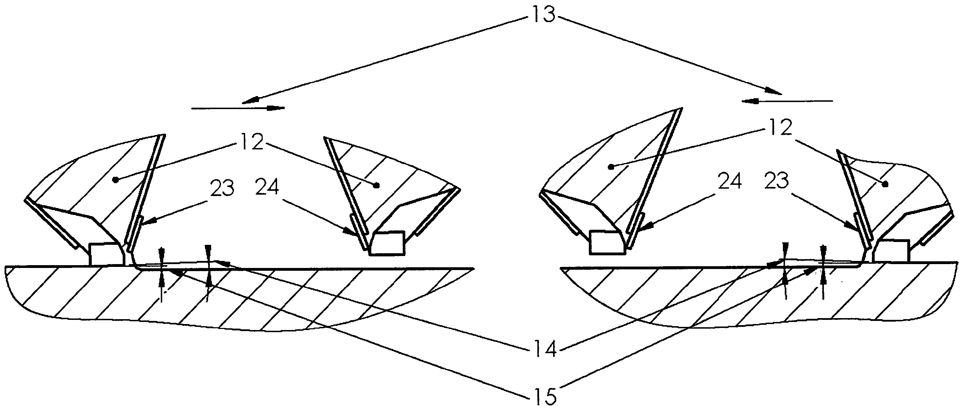

Fig. 31 und 32 zeigen die Funktionsweise dieser bevorzugten Ausführungsform der Erfindung, wobei in zwei Verfahrrichtungen beschichtet wird, d.h. Partikelmaterial in eine Richtung und eine Gegenrichtung auf das Baufeld aufgebracht wird.

Werden beide Silos durch dieselbe Quelle zum Schwingen angeregt, ist der Spalteinstellschieber eines Silos geschlossen und der des anderen Silos geöffnet. Wird lediglich ein Silo durch die ihm eigene Schwingungsquelle angeregt, ist der Spalteinstellschieber dieses Silos geöffnet, der Spalteinstellschieber des nicht angeregten Silos kann entweder geöffnet oder geschlossen sein. Das Partikelmaterial fließt durch den Ausflussspalt aus dem angeregten Silo mit dem geöffneten Spalteinstellschieber auf das Baufeld, der Partikelmaterialausfluss aus dem anderen Silo wird entweder durch den geschlossenen Spalteinstellschieber oder durch Nichtanregung oder durch beides gleichzeitig unterbunden. Währenddessen wird der Beschichter so über das Baufeld bewegt, dass die dem geöffneten Ausflussspalt des angeregten Silos nachfolgende Beschichterklinge das ausfließende Partikelmaterial ausstreicht und glättet. Die Winkeleinstellung erfolgt wie bereits beschrieben. Beim Wechsel der Beschichtungsrichtung wird entweder der geöffnete Spalteinstellschieber geschlossen und der andere Spalteinstellschieber geöffnet, oder das bisher nicht angeregt Silo wird zum Schwingen angeregt und das bisher angeregte Silo wird nicht mehr angeregt, oder beides, und das Gesamtsystem entsprechend in die andere Richtung gekippt.

### Ausführliche Beschreibung der Erfindung

Erfindungsgemäß wird eine der Anmeldung zugrunde liegenden Aufgabe dadurch gelöst, dass eine Vorrichtung bereitgestellt wird, die Mittel aufweist, die es erlauben in zwei Richtungen ohne Leerfahrten Partikelmaterial aufzutragen.

Im Folgenden werden zunächst einige Begriffe der Erfindung näher erläutert.

"3D-Formteil", "Formkörper" oder "Bauteil" im Sinne der Erfindung sind alles mittels des erfindungsgemäßen Verfahrens oder/und der erfindungsgemäßen Vorrichtung hergestellte dreidimensionale Objekte, die eine Formfestigkeit aufweisen.

"Bauraum" ist der geometrische Ort in dem die Partikelmaterialschüttung während des Bauprozesses durch wiederholtes Beschichten mit Partikelmaterial wächst oder durch den die Schüttung bei kontinuierlichen Prinzipien durchläuft. Im Allgemeinen wird der Bauraum durch einen Boden, die Bauplattform, durch Wände und eine offene Deckfläche, die Bauebene, begrenzt. Bei kontinuierlichen Prinzipien existieren meist ein Förderband und begrenzende Seitenwände. Der Bauraum kann auch durch eine sogenannte Jobbox ausgestaltet sein, die eine in die Vorrichtung ein-und ausfahrbare Einheit darstellt und eine Batch-Herstellung erlaubt, wobei eine Jobbox nach Prozessabschluss ausgefahren wird und sofort eine neue Jobbox in die Vorrichtung eingefahren werden kann, sodass das Herstellungsvolumen und somit die Vorrichtungsleistung erhöht wird.

Als "Partikelmaterialien" oder "partikelförmige Baumaterialien" oder "Baumaterialien" können alle für den Pulver-basierten 3D Druck bekannten Materialien verwendet werden, insbesondere Polymere, Keramiken und Metalle. Das Partikelmaterial ist vorzugsweise ein trocken frei fließendes Pulver, es kann aber auch ein kohäsives schnittfestes Pulver oder eine partikelbeladene Flüssigkeit verwendet werden. In dieser Schrift werden Partikelmaterial und Pulver synonym verwendet.

Der "Partikelmaterialauftrag" ist der Vorgang bei dem eine definierte Schicht aus Pulver erzeugt wird. Dies kann entweder auf der Bauplattform oder auf einer geneigten Ebene relativ zu einem Förderband bei kontinuierlichen Prinzipen erfolgen. Der Partikelmaterialauftrag wird im Weiteren auch "Beschichtung" oder "Recoaten" genannt.

"Selektiver Flüssigkeitsauftrag" kann im Sinne der Erfindung nach jedem Partikelmaterialauftrag erfolgen oder je nach den Erfordernissen des Formkörpers und zur Optimierung der Formkörperherstellung auch unregelmäßig, beispielsweise mehrfach bezogen auf einen Partikelmaterialauftrag, erfolgen. Dabei wird ein Schnittbild durch den gewünschten Körper aufgedruckt.

Als "Vorrichtung" zum Durchführen des erfindungsgemäßen Verfahrens kann jede bekannte 3D-Druckvorrichtung verwendet werden, die die erforderlichen Bauteile beinhaltet. Übliche Komponenten beinhalten Beschichter, Baufeld, Mittel zum Verfahren des Baufeldes oder anderer Bauteile bei kontinuierlichen Verfahren, Dosiervorrichtungen und Wärmeund Bestrahlungsmittel und andere dem Fachmann bekannte Bauteile, die deshalb hier nicht näher ausgeführt werden.

Das Baumaterial wird immer in einer "definierten Schicht" oder "Schichtstärke" aufgebracht, die je nach Baumaterial und Verfahrensbedingungen individuell eingestellt wird. Sie beträgt beispielsweise 0,05 bis 0,5 mm, vorzugsweise 0,1 bis 0,3 mm.

"Kippen" oder "Verkippen" des Silos bezeichnet das Drehen der Beschichtereinheit oder des Beschichters in Richtung der Verfahrrichtung, um die nicht wirkende Beschichterklinge (06) in einer Weise anzuheben, damit sie keinen Kontakt mit der Baufeld (26) hat und gleichzeitig den korrekten Winkel zwischen wirkender Beschichterklinge und Baufeld herzustellen. Das Kippen erfolgt damit auch zyklisch in Koordination mit dem Wechsel der Verfahrrichtung.

"Winkeleinstellung" im Sinne der Erfindung ist die Einstellung des Winkels zwischen Baufeld und jeder der beiden Beschichterklingen. Dabei kann ein Winkel von -5° bis +5° , vorzugsweise -3° bis +3°, noch mehr bevorzugt auf -1° bis +1°, eingestellt werden.

"Beschichter" oder "Recoater" ist die Einheit mittels derer das Partikelmaterial auf das Baufeld aufgebracht wird. Dieser kann aus einem Partikelmaterialvorratsbehälter und eine Partikelmaterialauftragseinheit bestehen, wobei erfindungsgemäß die Partikelmaterialauftragseinheit eine Partikelauftragsöffnung und eine Beschichterklinge umfasst.

"Schwingklinge" oder "Beschichterklinge" im Sinne der Erfindung ist das Bauteil, das das aufgetragenen Partikelmaterial nivelliert.

Eine "Partikelauftragsöffnung" im Sinne der Erfindung ist die Öffnung mittels derer das Partikelmaterial auf das Baufeld aufgebracht wird und die im Sinne der Erfindung so ausgestaltet ist, dass der Beschichter in zwei entgegen gesetzte Richtungen Partikelmaterial auf das Baufeld aufbringen kann. Die "Partikelauftragsöffnung" weist mindestens einen Ausflussspalt und ein oder zwei Dichtespalte auf oder zwei Ausflussspalte und zwei Dichtespalte. Die "Partikelauftragsöffnung" kann mit einem oder zwei Partikelmaterialsilos eine Einheit bilden.

"Ausflussspalt" im Sinne der Erfindung ist die spezielle Öffnung, die direkt Kontakt mit dem Baufeld hat, und die das Partikelmaterial auf das Baufeld abgibt.

"Dichtspalt" im Sinne der Erfindung ist eine Öffnung, in welcher das Partikelmaterial durch Schüttkegelbildung oder Brückenbildung am Ausfließen aus dem Silo gehindert wird. Bei einigen Ausprägungen der Erfindung kann der Dichtspalt gezielt und gesteuert verschlossen und geöffnet werden kann, um den Partikelfluss zu stoppen oder in Gang zu setzen. Ein Dichtspalt kann gleichzeitig auch ein Ausflussspalt sein.

"Spalteinstellelement "oder "Stellelement" im Sinne der Erfindung ist ein Mittel zur Steuerung des Durchmessers von Dichtespalt und Ausflussspalt.

Zum Aufbringen der Druckflüssigkeit werden bekannte "Druckköpfe" mit geeigneter Technik verwendet. Die Flüssigkeit kann mittels eines oder mehrerer Druckköpfe selektiv aufgebracht werden. Vorzugsweise sind der oder die Druckköpfe in ihrer Tropfenmasse einstellbar. Der oder die Druckköpfe können die Flüssigkeit in einer oder in beiden Verfahrrichtungen selektiv aufbringen. In dem Verfahren wird erreicht, dass das partikelförmige Baumaterial selektiv verfestigt, vorzugsweise selektiv verfestigt und gesintert wird.

Innerhalb des Bauprozesses werden Partikelmaterial und Druckflüssigkeit zyklisch aufgetragen. Dabei wird das Baufeld um die gewählte Schichtstärke abgesenkt bzw. die Auftragseinheiten entsprechend angehoben. Diese Vorgänge werden zyklisch wiederholt.

Die Aspekte der Erfindung werden im Folgenden näher beschrieben.

Die Erfindung betrifft in einem Aspekt ein Verfahren zum Herstellen von 3D-Formteilen, wobei der Partikelmaterialauftrag in zwei entgegen gesetzte Verfahrrichtungen erfolgt.

Mit dem erfindungsgemäßen Verfahren werden die oben ausgeführten Probleme oder Nachteile des Standes der Technik zumindest vermindert oder sogar ganz vermieden.

Ein weiterer Aspekt der Erfindung ist eine Vorrichtung, die geeignet ist zum Durchführen eines erfindungsgemäßen Verfahrens. Vorzugsweise ist die Vorrichtung gekennzeichnet durch eine oder zwei Beschichterklingen und ein oder zwei Partikelauftragsöffnungen, die vorzugsweise keinen Verschluss aufweisen, und in mindestens zwei Verfahrrichtungen ohne Leerfahrten Partikelmaterial auf das Baufeld aufbringen können.

Mit dem erfindungsgemäßen Verfahren und der erfindungsgemäßen Vorrichtung wurde eine besonders vorteilhafte Lösung gefunden, um zeitsparend und in wirtschaftlich sehr vorteilhafter Weise Formteile herzustellen. Dabei konnte durch die erfindungsgemäße Konstruktionsweise der Vorrichtung erreicht werden, dass die Anzahl von Leerfahrten stark vermindert oder ganz vermieden werden konnte. Somit wurde es durch die Erfindung möglich nicht nur in mehrere Richtungen selektiv zu drucken, sondern die Beschichtung mit Partikelmaterial zweidimensional zu ermöglichen. Dadurch kann nunmehr erreicht werden, dass sowohl der Beschichter als auch die Druckköpfe in mehrere Richtungen Partikelmaterial bzw. Druckflüssigkeit aufbringen kann. Dadurch konnte eine Parallelisierung der Arbeitsschritte erreicht werden, die Leistungssteigerungen des Verfahrens um 100% und mehr erlauben. Dadurch werden Vorteile in vielerlei Hinsicht erreicht. Insbesondere wird der Volumenoutput pro Zeiteinheit mit Hilfe der erfindungsgemäßen Vorrichtung und des Verfahrens signifikant gesteigert.

Die der Anmeldung zugrunde liegende Aufgabe wird durch das Verfahren gemäß dem Anspruch 1 der vorliegenden Anmeldung gelöst.

Dabei kann der Beschichter sequentiell in mindestens zwei Richtungen verfahren werden und beim Verfahren jeweils Partikelmaterial auf ein Baufeld aufgebracht werden und diese Schritte können wiederholt werden bis das gewünschte Formteil hergestellt ist.

Bei dem erfindungsgemäßen Verfahren wird der Beschichter in eine erste Richtung über das Baufeld verfahren und aus der Partikelauftragsöffnung wird Partikelmaterial in einer Schicht auf das Baufeld in eine Richtung aufgebracht, weitere für den Schichtaufbau und zur selektiven Verfestigung bekannte Schritte werden durchgeführt, anschließend wird der Beschichter in eine zweite Richtung über das Baufeld verfahren und aus der Partikelauftragsöffnung Partikelmaterial in einer weiteren Schicht auf das Baufeld in eine zweite Richtung aufgebracht, erneut werden weitere für den Schichtaufbau und zur selektiven Verfestigung bekannte Schritte durchgeführt, diese Schritte solange wiederholt werden bis das Formteil erstellt wurde und gegebenenfalls schließen sich weitere Verfahrensschritte an.

In dem erfindungsgemäßen Verfahren sind die Partikelauftragsöffnungen so ausgestaltet, dass das Partikelmaterial nach unten oder seitlich auf das Baufeld aufgebracht wird.

In dem erfindungsgemäßen Verfahren weist die Partikelauftragsöffnung vorzugsweise einen Ausflussspalt und zwei Dichtespalte auf.

In dem erfindungsgemäßen Verfahren wird die Partikelauftragsöffnung vorzugsweise von einem oder mehreren Partikelsilo mit Partikelmaterial versorgt.

Mit dem erfindungsgemäßen Verfahren wird das Partikelmaterial auf das Baufeld aufgebracht, indem beim Verfahren mit geeigneten Mitteln, z.B. einem Exzenter, jeweils eine Beschichterklinge in Schwingung versetzt wird, die Partikelmaterial auf das Baufeld aufbringen soll und dadurch das Partikelmaterial auf das Baufeld aufgebracht wird.

In dem erfindungsgemäßen Verfahren kann der Beschichter seitlich verkippbar verwendet werden und dadurch kann ein vorbestimmter Winkel zwischen Beschichterklinge und dem Baufeld eingestellt werden.

Der Winkel kann auf -5° bis +5° eingestellt werden, vorzugsweise auf -1 bis +1° .

Bei dem erfindungsgemäßen Verfahren wird der Winkel in geeigneter Weise eingestellt und der Winkel wie für das Verfahren erforderlich eingestellt. In einer bevorzugten Ausführungsform erfolgt die Winkeleinstellung durch ein Verkippen um eine Drehachse, die jene Achse darstellt, die durch Überschneidung der mittigen Partikelauftragsöffnung und der Beschichterklingenunterseiten entsteht.

Das Verkippen kann dabei mittels Stellelementen erfolgen.

Bei dem erfindungsgemäßen Verfahren streicht beim Verfahren des Beschichters und der Abgabe des Partikelmaterials die Beschichterklinge über das Baufeld und das Partikelmaterial wird dabei nivelliert.

In einem weiteren Aspekt betrifft die Erfindung eine Vorrichtung zum Herstellen von 3D-Formteilen, die i. mindestens einen Beschichter (25) mit zwei Beschichterklingen (06) und einer Partikelauftragsöffnung umfassend ein oder zwei Ausflussspalte (07) und ein oder zwei Dichtespalte (08), ii. mindestens einen Druckkopf, ii. mindestens ein Silo (27) für Partikelmaterial, iv. Spalteinstellelement (09, 19, 23, 24) oder eine verschiebbare Silowand (04) v. ein Baufeld (26) aufweist, wobei die Partikelauftragsöffnung im wesentlichen horizontal oder vertikal angeordnet ist oder die Vorrichtung eine Beschichtereinheit aufweist, die vi. ein oder zwei Silos (27), vii. zwei im wesentlichen horizontale oder vertikale Partikelauftragsöffnungen und zwei Beschichterklingen (06) umfasst, sowie viii. mindestens einen Druckkopf, ix. ein oder zwei Mittel zum Erzeugen von Schwingungen und x. ein Baufeld (26), und wobei die Partikelauftragsöffnung(en), umfassend vorzugsweise ein oder zwei Ausflussspalte (07) und ein oder zwei Dichtespalte (08), optional schaltbar sind.

Die Partikelauftragsöffnung ist vorzugsweise im Wesentlichen am unteren Ende des oder der Silos angebracht.

Das oder die Silos oder/und die Partikelauftragsöffnungen und Beschichterklingen sind mit geeigneten Mitteln um eine Achse verkippbar und wobei ein Winkel von -5° bis +5° zwischen Baufeld und jeder der beiden Beschichterklingen einstellbar ist.

Bei der erfindungsgemäßen Vorrichtung sind das oder die Silos, die Partikelauftragsöffnungen und die Beschichterklingen mit geeigneten Mitteln einzeln um eine Achse verkippbar und/oder einstellbar. Vorzugsweise ist jede Beschichterklinge unabhängig mit einem Mittel zum Erzeugen von Schwingungen gekoppelt.

Der Dichtespalt und der Ausflussspalt werden in geeigneter Wiese an die Erfordernisse des verwendeten Partikelmaterials angepasst, vorzugsweise sind sie mittels Spalteinstellelement auf eine Breite von 5 bis 0 mm, vorzugsweise 3 bis 1 mm, einstellbar.

In einer bevorzugten Vorrichtung können die Vorrichtungskomponenten so angeordnet sein, dass jeweils eine Beschichterklinge und/oder der Silo eine Schwingung ausführen kann.

Vorzugsweise ist die Vorrichtung so ausgestaltet, wobei die Schwingung vertikale oder/und horizontale Komponenten aufweist oder/und im Wesentlichen nach Art einer Drehbewegung erfolgt.

In der erfindungsgemäßen Vorrichtung ist die Einheit aus Silos, Partikelauftragsöffnungen, Beschichterklingen und Mittel zum Erzeugen von Schwingungen in zwei gegensätzliche Richtungen verfahrbar und in beide Richtungen ein Auftragen von Partikelmaterial möglich.

In noch einem weiteren Aspekt betrifft die Erfindung eine 3D-Druckvorrichtung, welche eine Partikelbeschichtereinheit zum Herstellen von 3D-Formteilen, die aufweist i. eine oder zwei Partikelauftragsöffnungen, die im wesentlichen horizontal oder vertikal angeordnet sind, umfassend ein oder zwei Ausflussspalte (07) und gegebenenfalls ein oder zwei Dichtespalte (08) oder/und ein oder zwei Spalteinstellelemente (19), ii. zwei Beschichterklingen (06), iii. ein oder zwei Partikelmaterialsilo(s), iv. ein oder zwei Mittel zum Erzeugen von Schwingungen, und wobei die Partikelbeschichtereinheit ein Mittel aufweist, wodurch sie um einen Winkel verkippbar ist.

Eine derartige Partikelbeschichtereinheit kann mit bekannten 3D-Druckvorrichtungen kombiniert werden und in diese integriert werden.

In einer bevorzugten Ausführungsform sind in der Partikelbeschichtereinheit die zwei Beschichterklingen (06) als ein Bauteil (21) ausgeführt.

### Bezugszeichenliste

- 1: Beschichterträger
- 2: Gelenk, vorzugsweise Festkörpergelenk
- 3: Klemmelement
- 4: Silowand (Partikelvorratsbehälter)
- 5: Beschichterklingenträger
- 6: Beschichterklinge
- 7: Ausflussspalt (Partikelauftragsöffnung)
- 8: Dichtungsspalt
- 9: Spalteinstellelement
- 10: Bewegungsrichtung des Spalteinstellelements
- 11: Austauschbare Beschichterklingen zur Einstellung des Klingenwinkels zum Baufeld (optional)
- 12: Partikelmaterialfüllung
- 12': Partikelmaterial
- 13: Bewegungsrichtung des Beschichters
- 13': eine erste Richtung
- 13": eine zweite Richtung
- 14: Klingenwinkel (Winkel)
- 15: Schichtstärke der aufgetragenen Partikelmaterialschicht
- 16: Schüttkegeldichtung
- 17: Brückendichtung
- 18: Versteifungselement
- 19: Spalteinstellschieber (Spalteinstellelement)
- 20: Bewegungsrichtung des Spalteinstellschiebers
- 21: Klingensystem aus einem Bauteil
- 22: Bewegungsrichtung der verschieblichen Silowand mit Beschichterklingenträger und Beschichterklinge
- 23: Geöffneter Spalteinstellschieber
- 24: Geschlossener Spalteinstellschieber
- 25: Beschichter (Recoater)
- 26: Baufeld
- 27: Silo (Partikelsilo, Partikelmaterialsilo)

## Patentansprüche

1. 3D-Druckverfahren zum Herstellen von 3D-Formteilen mittels Schichtauftragstechnik, wobei ein Beschichter (25) verwendet wird, der zwei Beschichterklingen (06) und eine Partikelauftragsöffnung oder zwei Beschichterklingen (06) und zwei Partikelauftragsöffnungen, oder eine Beschichterklinge (06) und zwei Partikelauftragsöffnungen, wobei der Beschichter ein oder zwei Ausflussspalten (07) und eine oder zwei Dichtspalten (08) und Spalteinstellelement (9, 19, 23, 24); oder ein oder zwei Ausflussspalten (07) und eine verschiebbare Silowand (04) aufweist und weitere für den Schichtaufbau und zur selektiven Verfestigung bekannte Schritte durchgeführt werden, diese Schritte solange wiederholt werden bis das Formteil erstellt wurde und sich gegebenenfalls weitere Verfahrensschritte anschließen.

2. 3D-Druckverfahren nach Anspruch 1, wobei im Beschichter zum Dosieren von Partikelmaterial die Partikelauftragsöffnungen mit einer Schüttkegeldichtung (16) oder mittels Spalteinstellschieber (19, 23, 24) oder verschiebbarer Silowand (04) verschlossen und geöffnet werden.

3. 3D-Druckverfahren nach Anspruch 1 oder,
wobei der Beschichter (25) sequentiell in zwei Richtungen (13) verfahren wird und beim Verfahren jeweils Partikelmaterial (12') auf ein Baufeld (26) aufbringt und diese Schritte wiederholt werden können, vorzugsweise
wobei der Beschichter (25) in eine erste Richtung (13) über das Baufeld (26) verfahren wird und aus der Partikelauftragsöffnung Partikelmaterial (12') in einer Schicht auf das Baufeld (26) in eine Richtung (13') aufgebracht wird, weitere für den Schichtaufbau und zur selektiven Verfestigung bekannte Schritte durchgeführt werden, anschließend der Beschichter (25) in eine zweite Richtung (13") über das Baufeld (26) verfahren wird und aus der Partikelauftragsöffnung Partikelmaterial (12') in einer weiteren Schicht auf das Baufeld (26) in eine zweite Richtung (13") aufgebracht wird

4. 3D-Druckverfahren nach einem der vorhergehenden Ansprüche,
wobei die Partikelauftragsöffnungen so ausgestaltet sind, dass das Partikelmaterial (12') nach unten oder seitlich auf das Baufeld aufgebracht wird.

5. 3D-Druckverfahren nach einem der vorhergehenden Ansprüche,
wobei die Partikelauftragsöffnung einen Ausflussspalt (07) und zwei Dichtespalte (08) aufweist oder/und
wobei die Partikelauftragsöffnung von einem oder mehreren Partikelsilo (27) mit Partikelmaterial (12') versorgt wird.

6. 3D-Druckverfahren nach einem der vorhergehenden Ansprüche,
wobei das Partikelmaterial (12') auf das Baufeld (26) aufgebracht wird, indem beim Verfahren mit geeigneten Mitteln, z.B. einem Exzenter, jeweils eine Beschichterklinge (06) in Schwingung versetzt wird und dadurch das Partikelmaterial (12') auf das Baufeld (26) aufgebracht wird.

7. 3D-Druckverfahren nach einem der vorhergehenden Ansprüche,
wobei der Beschichter (25) seitlich verkippbar ist und dadurch ein vorbestimmter Winkel (14) zwischen Beschichterklinge (06) und dem Baufeld (26) eingestellt wird, vorzugsweise
wobei der Winkel (14) auf -5 bis +5° eingestellt wird.

8. 3D-Druckverfahren nach einem der vorhergehenden Ansprüche,
wobei das Verkippen um eine Drehachse erfolgt, die jene Achse darstellt, die durch Überschneidung der mittigen Partikelauftragsöffnung und der Beschichterklingenunterseiten entsteht oder/und
wobei das Verkippen mittels Stellelementen erfolgt.

9. 3D-Druckverfahren nach einem der vorhergehenden Ansprüche,
wobei beim Verfahren des Beschichters (25) und der Abgabe des Partikelmaterials (12') die Beschichterklinge (06) über das Baufeld (26) streicht und das Partikelmaterial (12') nivelliert.

10. 3D-Druckvorrichtung zum Herstellen von 3D-Formteilen, die i. mindestens einen Beschichter (25) mit zwei Beschichterklingen (06) und einer Partikelauftragsöffnung umfassend ein oder zwei Ausflussspalte (07) und ein oder zwei Dichtespalte (08), ii. mindestens einen Druckkopf, iii. mindestens ein Silo (27) für Partikelmaterial, iv. Spalteinstellelement (9, 19, 23, 24) oder eine verschiebbare Silowand (04) und v. ein Baufeld (26) aufweist, wobei die Partikelauftragsöffnung im wesentlichen horizontal oder vertikal angeordnet ist oder die Vorrichtung eine Beschichtereinheit aufweist, die vi. ein oder zwei Silos (27), vii. zwei im wesentlichen horizontale oder vertikale Partikelauftragsöffnungen und zwei Beschichterklingen (06) umfasst, sowie viii. mindestens einen Druckkopf, ix. ein oder zwei Mittel zum Erzeugen von Schwingungen und x. ein Baufeld (26), und wobei die Partikelauftragsöffnung(en), umfassend vorzugsweise ein oder zwei Ausflussspalte (07) und ein oder zwei Dichtespalte (08), optional schaltbar sind.

11. 3D-Druckvorrichtung nach Anspruch 10, wobei die Partikelauftragsöffnung(en) im Wesentlichen am unteren Ende des oder der Silos (27) angebracht ist, vorzugsweise
wobei das oder die Silos (27) oder/und die Partikelauftragsöffnungen und Beschichterklingen (06) mit geeigneten Mitteln um eine Achse verkippbar sind und ein Winkel (14) von 0,1 bis 5° zwischen Baufeld (26) und jeder der beiden Beschichterklingen (06) einstellbar ist.

12. 3D-Druckvorrichtung nach Anspruch 10, wobei das oder die Silos (27), die Partikelauftragsöffnungen und die Beschichterklingen (06) mit geeigneten Mitteln einzeln um eine Achse verkippbar und/oder einstellbar sind.

13. 3D-DRuckvorrichtung nach Anspruch 10, wobei jede Beschichterklinge (06) unabhängig mit einem Mittel zum Erzeugen von Schwingungen gekoppelt ist, vorzugsweise
wobei der Dichtespalt (08) und der Ausflussspalt (07) mittels Spalteinstellelement (19) auf eine Breite von 5 bis 0 mm, vorzugsweise 3 bis 1 mm, einstellbar sind.

14. 3D-Druckvorrichtung nach Anspruch 10, wobei die Vorrichtungskomponenten so angeordnet sind, dass jeweils eine Beschichterklinge (06) und/oder der Silo (27) eine Schwingung ausführen kann.

15. 3D-Druckvorrichtung nach Anspruch 10, wobei die Schwingung vertikale oder/und horizontale Komponenten aufweist oder/und in Wesentlichen nach Art einer Drehbewegung erfolgt, vorzugsweise wobei die Einheit aus Silos (27), Partikelauftragsöffnungen, Beschichterklingen (06) und Mittel zum Erzeugen von Schwingungen in zwei gegensätzliche Richtungen (13', 13") verfahrbar sind und in beide Richtungen (13) ein Auftragen von Partikelmaterial (12') möglich ist.

16. 3D-Druckvorrichtung nach Anspruch 10, die eine Partikelbeschichtereinheit zum Herstellen von 3D-Formteilen aufweist, die aufweist i. eine oder zwei Partikelauftragsöffnungen, die im wesentlichen horizontal oder vertikal angeordnet sind, umfassend ein oder zwei Ausflussspalte (07) und gegebenenfalls ein oder zwei Dichtespalte (08) oder/und ein oder zwei Spalteinstellelemente (19), ii. zwei Beschichterklingen (06), iii. ein oder zwei Partikelmaterialsilo(s), iv. ein oder zwei Mittel zum Erzeugen von Schwingungen, und wobei die Partikelbeschichtereinheit ein Mittel aufweist, wodurch sie um einen Winkel verkippbar ist, vorzugsweise
wobei die zwei Beschichterklingen (06) als ein Bauteil (21) ausgeführt sind.

## Claims

1. A 3D printing method for producing 3D moulded parts by means of a layer application technique, wherein a coater (25) is used, comprising two coating blades (06) and one particle application opening or two coating blades (06) and two particle application openings, or comprising one coating blade (06) and two particle application openings, wherein the coater comprises one or two discharge gaps (07) and one or two sealing gaps (08) and gap adjusting elements (9, 19, 23, 24) or one or two discharge gaps (07) and a movable silo wall (04), and further steps known for layered construction and for selective solidification are performed, said steps being repeated until the moulded part has been produced, and optionally, further process steps follow.

2. The 3D printing method according to claim 1,
wherein in the coater for dosing particulate material the particle application openings are closed and opened with a cone seal (16) or by means of gap adjusting sliders (19, 23, 24) or a movable silo wall (04).

3. The 3D printing method according to claim 1 or 2,
wherein the coater (25) is sequentially moved in two directions (13) and applies particulate material (12') onto a construction field (26) during each movement and these steps can be repeated, preferably
wherein the coater (25) is moved over the construction field (26) in a first direction (13) and a layer of particulate material (12') is applied onto the construction field (26) from the particle application opening in one direction (13'), further known steps for layered construction and for selective solidification are performed, then the coater (25) is moved over the construction field (26) in a second direction (13") and a further layer of particulate material (12') is applied onto the construction field (26) from the particle application opening in a second direction (13").

4. The 3D printing method according to any one of the preceding claims, wherein the particle application openings are configured such that the particulate material (12') is applied downwardly or laterally onto the construction field.

5. The 3D printing method according to any one of the preceding claims, wherein the particle application opening comprises a discharge gap (07) and two sealing gaps (08) or/and
wherein the particle application opening is supplied with particulate material (12') from one or more particle silos (27).

6. The 3D printing method according to any one of the preceding claims, wherein the particulate material (12') is applied onto the construction field (26) in that, during the movement, one coating blade (06) each is made to oscillate by suitable means, e.g. an eccentric, and the particulate material (12') is thereby applied onto the construction field (26).

7. The 3D printing method according to any one of the preceding claims, wherein the coater (25) is laterally tiltable, thereby adjusting a predetermined angle (14) between the coating blade (06) and the construction field (26), preferably wherein the angle (14) is adjusted to between -5 and +5°.

8. The 3D printing method according to any one of the preceding claims, wherein the tilting is effected about an axis of rotation representing the axis formed by an overlap of the central particle application opening and the coating blade undersides or/and
wherein the tilting is effected by means of actuators.

9. The 3D printing method according to any one of the preceding claims, wherein during the movement of the coater (25) and the discharge of the particulate material (12') the coating blade (06) sweeps over the construction field (26) and levels the particulate material (12').

10. A 3D printing device for producing 3D moulded parts, comprising i. at least one coater (25) with two coating blades (06) and a particle application opening comprising one or two discharge gaps (07) and one or two sealing gaps (08), ii. at least one print head, iii. at least one silo (27) for particulate material, iv. gap adjusting elements (9, 19, 23, 24) or a movable silo wall (04), and v. a construction field (26), wherein the particle application opening is arranged substantially horizontally or vertically, or the device comprises a coating unit comprising vi. one or two silos (27), vii. two substantially horizontal or vertical particle application openings and two coating blades (06), as well as viii. at least one print head, ix. one or two means for generating oscillations and x. a construction field (26), and wherein the particle application opening(s), preferably comprising one or two discharge gaps (07) and one or two sealing gaps (08), is (are) optionally switchable.

11. The 3D printing device according to claim 10, wherein the particle application opening(s) is (are) arranged substantially at the lower end of the silo(s) (27), preferably
wherein the silo(s) (27) or/and the particle application openings and coating blades (06) are tiltable by suitable means about an axis and an angle (14) of 0.1 to 5 ° is adjustable between the construction field (26) and each of the two coating blades (06).

12. The 3D printing device according to claim 10, wherein the silo(s) (27), the particle application openings and the coating blades (06) are tiltable and/or adjustable individually about an axis by suitable means.

13. The 3D printing device according to claim 10, wherein each coating blade (06) is independently coupled with a means for generating oscillations, preferably
wherein the sealing gap (08) and the discharge gap (07) are adjustable by means of a gap adjusting element (19) to a width of 5 to 0 mm, preferably 3 to 1 mm.

14. The 3D printing device according to claim 10, wherein the device components are arranged such that one respective coating blade (06) and/or the silo (27) can each perform an oscillation.

15. The 3D printing device according to claim 10, wherein said oscillation comprises vertical or/and horizontal components or/and is performed substantially in the manner of a rotary motion, preferably
wherein the unit consisting of silos (27), particle application openings, coating blades (06) and means for generating oscillations is movable in two opposite directions (13', 13") and the application of particulate material (12') is possible in both directions (13).

16. The 3D printing device according to claim 10, which comprises a particle application unit for producing 3D moulded parts which comprises i. one or two particle application openings, which are arranged substantially horizontally or vertically, comprising one or two discharge gaps (07) and optionally one or two sealing gaps (08) or/and one or two gap adjusting elements (19), ii. two coating blades (06), iii. one or two particulate material silo(s), iv. one or two means for generating oscillations, and wherein the particle application unit comprises a means for tilting said unit about an angle, preferably
wherein said two coating blades (06) are provided as one single component (21).

## Revendications

1. Procédé d'impression 3D pour la fabrication de pièces 3D au moyen d'une technique d'application de couches, dans lequel on utilise un enducteur (25) qui présente deux lames applicatrices (06) et une ouverture d'application de particules, ou deux lames applicatrices (06) et deux ouvertures d'application de particules, ou une lame applicatrice (06) et deux ouvertures d'application de particules, l'enducteur présentant une ou deux fentes de sortie (07) et une ou deux fentes d'étanchéité (08) et des éléments de réglage de fente (9, 19, 23, 24) ou une ou deux fentes de sortie (07) et une paroi de silo déplaçable (04), et d'autres étapes connues pour la construction couche par couche et pour la consolidation sélective sont effectuées, ces étapes sont répétées jusqu'à ce que la pièce moulée soit produite et, si nécessaire, d'autres étapes du procédé suivent.

2. Procédé d'impression 3D selon la revendication 1,
dans lequel les ouvertures d'application de particules dans l'enducteur sont fermées et ouvertes pour le dosage de la matière en particules au moyen d'un joint de cône de coulée (16) ou au moyen de glissières de réglage de fente (19, 23, 24) ou d'une paroi de silo déplaçable (04).

3. Procédé d'impression 3D selon la revendication 1 ou 2,
dans lequel l'enducteur (25) est déplacée séquentiellement dans deux directions (13) et, pendant le procédé, applique un matériau particulaire (12') sur un champ de construction (26) et ces étapes peuvent être répétées, de préférence dans lequel l'enducteur (25) est déplacé dans une première direction (13) sur le champ de construction (26) et une couche de matériau particulaire (12') est appliquée depuis l'ouverture d'application de particules sur le champ de construction (26) dans une direction (13'), d'autres étapes connues pour la construction couche par couche et pour la solidification sélective sont réalisées, puis l'enducteur (25) est déplacé dans une deuxième direction (13") sur le champ de construction (26) et une autre couche de matériau particulaire (12') est appliquée depuis l'ouverture d'application de particules sur le champ de construction (26) dans une deuxième direction (13").

4. Procédé d'impression 3D selon l'une quelconque des revendications précédentes,
dans lequel les ouvertures d'application de particules sont conçues de telle manière que le matériau particulaire (12') est appliqué vers le bas ou latéralement sur le champ de construction.

5. Procédé d'impression 3D selon l'une quelconque des revendications précédentes,
dans lequel l'ouverture d'application de particules présente une fente de sortie (07) et deux fentes d'étanchéité (08) ou/et
dans lequel l'ouverture d'application de particules est alimentée en matériau particulaire (12') provenant d'un ou de plusieurs silos à particules (27).

6. Procédé d'impression 3D selon l'une quelconque des revendications précédentes,
dans lequel le matériau particulaire (12') est appliqué sur le champ de construction (26) en faisant osciller une lame applicatrice respective (06) pendant le procédé par des moyens appropriés, par exemple un excentrique, et en appliquant ainsi le matériau particulaire (12') sur le champ de construction (26).

7. Procédé d'impression 3D selon l'une quelconque des revendications précédentes,
dans lequel l'enducteur (25) peut être incliné latéralement et un angle (14) prédéterminé est ainsi réglé entre la lame applicatrice (06) et le champ de construction (26), de préférence dans lequel l'angle (14) est réglé de -5 à +5°.

8. Procédé d'impression 3D selon l'une quelconque des revendications précédentes,
dans lequel l'inclinaison se fait autour d'un axe de rotation représentant l'axe résultant de l'intersection de l'ouverture d'application de particules centrale et des faces inférieures de la lame applicatrice, ou/et
dans lequel l'inclinaison se fait au moyen d'éléments de commande.

9. Procédé d'impression 3D selon l'une quelconque des revendications précédentes,
dans lequel, pendant le mouvement de l'enducteur (25) et la décharge du matériau particulaire (12'), la lame applicatrice (06) balaye le champ de construction (26) et nivelle le matériau particulaire (12').

10. Dispositif d'impression 3D pour la fabrication de pièces 3D, qui comprend i. au moins un enducteur (25) avec deux lames applicatrices (06) et une ouverture d'application de particules comprenant une ou deux fentes de sortie (07) et une ou deux fentes d'étanchéité (08), ii. au moins une tête d'impression, iii. au moins un silo (27) pour du matériau particulaire, iv. des éléments de réglage de fente (9, 19, 23, 24) ou une paroi de silo déplaçable (04) et v. un champ de construction (26), l'ouverture d'application de particules étant disposée sensiblement horizontalement ou verticalement ou le dispositif comprenant une unité de revêtement qui comprend vi. un ou deux silos (27), vii. deux ouvertures d'application de particules sensiblement horizontales ou verticales et deux lames applicatrices (06), ainsi que viii. au moins une tête d'impression, ix. un ou deux moyens pour générer des oscillations et x. un champ de construction (26), et l'ouverture (les ouvertures) d'application de particules, comprenant de préférence une ou deux fentes de sortie (07) et un ou deux fente d'étanchéité (08), étant commutables en option.

11. Dispositif d'impression 3D selon la revendication 10, dans lequel l'ouverture (les ouvertures) d'application de particules est sensiblement situé à l'extrémité inférieure du ou des silos (27), de préférence
dans lequel le ou les silos (27) ou/et les ouvertures d'application de particules et les lames applicatrices (06) peuvent être inclinées autour d'un axe par des moyens appropriés, et un angle (14) de 0,1 à 5° peut être réglé entre le champ de construction (26) et chacune des deux lames applicatrices (06).

12. Dispositif d'impression 3D selon la revendication 10, dans lequel le ou les silos (27), les ouvertures d'application de particules et les lames applicatrices (06) peuvent être inclinés et/ou réglés individuellement autour d'un axe par des moyens appropriés.

13. Dispositif d'impression 3D selon la revendication 10, dans lequel chaque lame applicatrice (06) est indépendamment couplée à un moyen pour générer des oscillations, de préférence
dans lequel la fente d'étanchéité (08) et la fente de sortie (07) peuvent être réglées à une largeur de 5 à 0 mm, de préférence de 3 à 1 mm, au moyen d'un élément de réglage de fente (19).

14. Dispositif d'impression 3D selon la revendication 10, dans lequel les composants du dispositif sont disposés de telle sorte qu'une lame applicatrice (06) et/ou le silo (27) puissent effectuer une oscillation dans chaque cas.

15. Dispositif d'impression 3D selon la revendication 10, dans lequel l'oscillation présente des composantes verticales et/ou horizontales et/ou se présente essentiellement sous la forme d'un mouvement rotatif, de préférence
dans lequel l'unité composée de silos (27), d'ouvertures d'application de particules, de lames applicatrices (06) et de moyens pour générer des oscillations peut être déplacée dans deux directions opposées (13', 13") et une application de matériau particulaire (12') est possible dans les deux directions (13).

16. Dispositif d'impression 3D selon la revendication 10, qui présente une unité de revêtement particulaire pour la fabrication de pièces 3D, qui présente I. une ou deux ouvertures d'application de particules qui sont disposées essentiellement horizontalement ou verticalement, comprenant une ou deux fentes de sortie (07) et éventuellement une ou deux fentes d'étanchéité (08) et/ou un ou deux éléments de réglage de fente (19), II. deux lames applicatrices (06), III. un ou deux silo(s) de matériau particulaire, IV. un ou deux moyens pour générer des oscillations, et dans lequel l'unité de revêtement particulaire présente un moyen par lequel elle peut être inclinée d'un angle, de préférence
dans lequel les deux lames applicatrices (06) sont conçues comme un seul composant (21).
